(19) Europäisches Patentamt
European Patent Office
Office européen des brevets

(11) Publication number : **0 455 585 B1**

# (12) EUROPEAN PATENT SPECIFICATION

(45) Date of publication of patent specification : **23.03.94 Bulletin 94/12**

(51) Int. Cl.$^5$ : **C08G 77/388,** C08G 77/26, C08G 77/458, C08F 283/12, G02B 1/04

(21) Application number : **91810291.4**

(22) Date of filing : **17.04.91**

## (54) Unsaturated urea polysiloxanes.

(30) Priority : **26.04.90 US 514893**

(43) Date of publication of application : **06.11.91 Bulletin 91/45**

(45) Publication of the grant of the patent : **23.03.94 Bulletin 94/12**

(84) Designated Contracting States : **AT BE CH DE DK ES FR GB GR IT LI LU NL SE**

(56) References cited :
**EP-A- 0 186 424**
**EP-A- 0 274 699**
**US-A- 4 594 401**
**US-A- 4 605 712**

(73) Proprietor : **CIBA-GEIGY AG**
**Klybeckstrasse 141**
**CH-4002 Basel (CH)**

(72) Inventor : **Mueller, Karl F.**
**119 W. 77th Street**
**New York, N.Y. 10024 (US)**
Inventor : **Bochnik, Michael C.**
**33 Linden Street**
**Yonkers, N.Y. 10701 (US)**

EP 0 455 585 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Di- or poly-vinyl functional polymeric compounds, of about 400 to about 10,000 MW, hereinafter called macromers, are known for a long time and are widely used to make UV-curable coatings, films or crosslinked polymeric articles. Typically these compounds are prepared from low molecular weight polyester- or polyether diols by esterification with acrylic or methacrylic acid, or maleic anhydride; alternatively, they can be more easily prepared by first reacting those polyester- or polyether diols with 2 equivalents of a diisocyanate followed by endcapping with, for instance, 2-hydroxyethyl-methacrylate; such poly-urethane-macromers are described, for instance in US-A-3,509,234 and US-A-4, 192,827.

An even simpler route to essentially similar urethane-macromers is via the reaction of poly-ester- or polyether diols with isocyanate-substituted vinyl monomers, typically a methacrylate such as 2-isocyanatoethyl methacrylate (IEM); relevant patents describing such macromers are US-A-4,233,425 and US-A-4,320,221.

The macromer approach has also been applied to polysiloxane (PDMS) dialkanols and PDMS-dialkanol-bis methacrylates are even commercially available. Both urethane based macromer types have also been described, for instance in US-A-4,136,250, US-A-4,130,708 and US-A-4,486,577.

In all instances the linking group between the PDMS-chain and the easily polymerizable vinyl group contains an ester linkage, contributed either by the hydroxyalkyl- or aminoalkyl methacrylate used in the capping reaction, or by 2-isocyanatoethyl methacrylate. However, this ester linkage constitutes a weakness, if great hydrophilic stability is a requirement, as for example in a PDMS-containing hydrogel.

US-A-4,837,289 discloses PDMS-tetraalkanols capped with m-isopropenyl-α,α-dimethyl-benzylisocyanate (TMI), thus providing an ester free linkage group. TMI is a commercially available compound (American Cyanamid) and has been used in a variety of applications, for instance: in the preparation of vinyl-diols (Polym. Mater. Sci. Eng., 57, 565 (1987); in the preparation of macromer for adhesives, by reaction with polyols, for instances poly-tetramethylene ether glycol (FR-A1-2,579,611 ); in high-solids coatings after reaction of a polyester polyol, as described in US-A-4,609,706; the reaction of TMI with amines is also disclosed in Polym. Mater. Sci. Eng., 53, 534 (1985).

No reaction products of aminoalkyl-substituted polysiloxanes and m-isopropenyl-α,α-dimethylbenzyl isocyanate have been described, although the reaction of products of aminoalkyl-substituted PDMS and 2-isocyanatoethyl methacrylate are described in US-A-4,563,539 and US-A-4,605,712.

It has now been discovered that by reaction of poly-(aminoalkyl)-polysiloxane with m-isopropenyl-α,α-dimethylbenzyl isocyanate, or any similar styrenic isocyanate, a PDMS-macromer can readily be prepared, which results in superior properties when incorporated into rigid, oxygen permeable polymers or into hydrogels.

It is an object of this invention to provide an easily polymerizable, hydrolytically stable and rigidity imparting urea-polysiloxane macromer.

It is a further object of this invention to make improved rigid, oxygen permeable contact lenses and oxygen permeable hydrogels by copolymerization of said urea-polysiloxane macromer with vinyl monomers.

The novel polysiloxane-urea styrenic macromers are of the general structures A1 or A2:

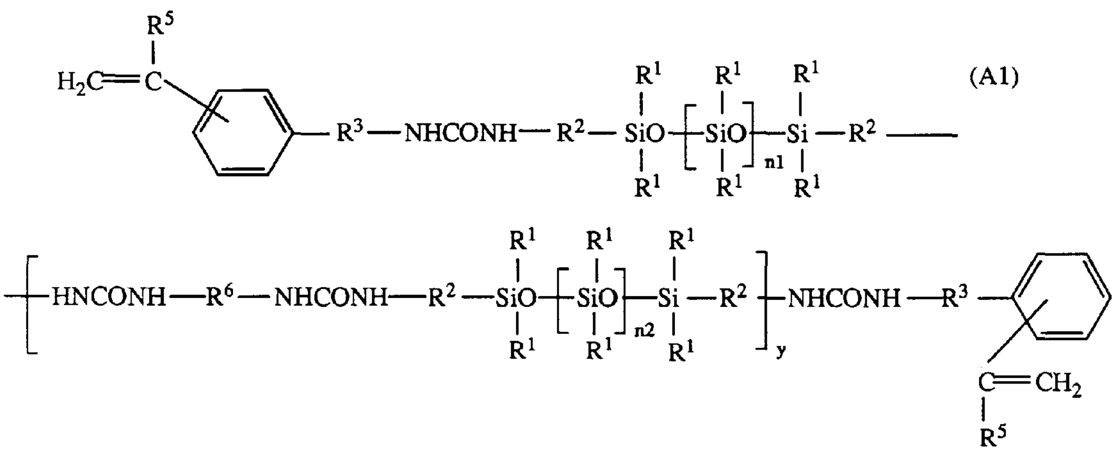

(A1)

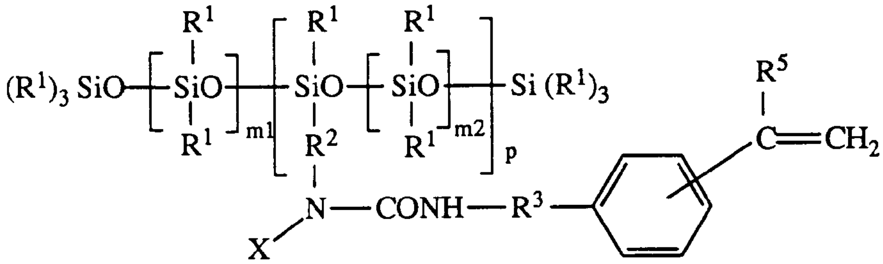

(A2)

wherein, independently of each other,
$R^1$ is methyl, phenyl or 3,3,3-trifluoropropyl,
$R^2$ is a divalent saturated linear or branched hydrocarbon radical having 1 to 6 carbon atoms,
$R^3$ is a direct bond or has the same definition as $R^2$,
$R^5$ is hydrogen or methyl,
$R^6$ is the divalent residue of an aliphatic, cycloaliphatic or aromatic diisocyanate of structure

$$OCN\text{-}R^6\text{-}NCO,$$

n1 and n2 are integers from 2 to 250, preferably 10 to 50, more preferred 10 to 20, with the proviso that the sum n1 + n2 is not greater than 250,
m1 and m2 are integers from 2 to 200, preferably 5 to 100, with the proviso that the sum m1 + m2 is not greater than 250,
y is 0 to 2,
p has a value of 1 to 10, preferably 1 to 3,
X is hydrogen or has the structure E:

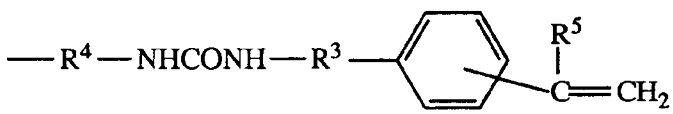

(E)

wherein $R^4$ is a divalent saturated linear or branched hydrocarbon radical havin 1 to 6 carbon atoms.

Preferably, a divalent saturated linear or branched hydrocarbon radical of from 1-6 carbon atoms is $C_1$-$C_6$ alkylene, such as methylene, ethylene, propylene, or butylene, e.g. 1,3-propylene or 2,2-propylene.

The divalent residue of an aliphatic, cycloaliphatic or aromatic diisocyanate preferably is an aliphatic or aromatic divalent residue with 6 to 12 carbon atoms. Preferably these residues are divalent phenylene-$C_1$-$C_4$-alkylene residues unsubstituted or substituted by $C_1$-$C_4$-alkyl, phenylene unsubstituted or substituted by $C_1$-$C_4$-alkyl or $C_1$-$C_7$-alkylene unsubstituted or substituted by $C_1$-$C_4$-alkyl.

Preferred are macromers of structure A1, in which
$R^1$ is methyl,
$R^2$ is trimethylene,
$R^3$ is $-C(CH_3)_2-$
$R^5$ is methyl,
y is zero, and
n1 is 5 to 100.

Also preferred are macromers of structure A1, in which most or all of
$R^1$ are methyl,
$R^2$ is trimethylene,
$R^3$ is $-C(CH_3)_2-$
$R^5$ is methyl,
y is 1,
n1 + n2 is 10 to 20,
and $R^6$ is an aliphatic or aromatic divalent residue with 6 to 12 carbon atoms.

Also preferred are macromers of structure A2, wherein most or all of
$R^1$ are methyl,
$R^2$ is trimethylene,
$R^3$ is $-C(CH_3)_2-$

$R^5$ is methyl,
X is of structure E,
$R^4$ is ethylene,
m1 and m2 are 5 to 100, with the sum m1 + m2 not greater than 150,
and p is 1 to 3.

Also preferred are macromers wherein $R^3$ is a direct bond and $R^5$ is hydrogen with the $-CR^5=CH_2$ group being in the para position relevant to $R^3$; or wherein $R^3$ is $-C(CH_3)_2-$ and $R^5$ is methyl with the $-CR^5=CH_2$ group being in the meta position relevant to $R^3$.

Most preferred are macromers of structure A1, wherein $R^1$, $R^2$, $R^3$ and $R^5$ are as defined as for the preferred A1 macromer, and n1 is 10 to 50.

The macromers of the present invention are made by mixing together an aminoalkyl-functional polysiloxane of either structure

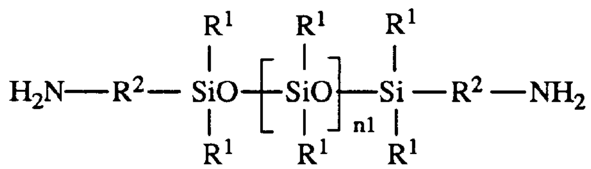
(C1)

or

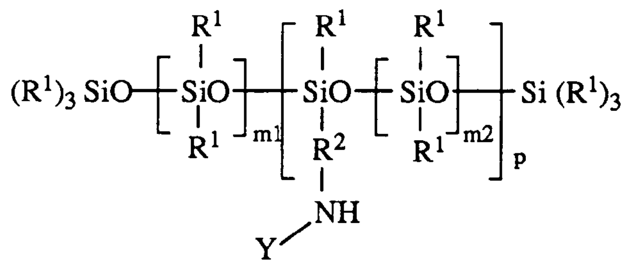
(C2)

wherein Y is hydrogen or $-R^4NH_2$, with a styrene-isocyanate of structure

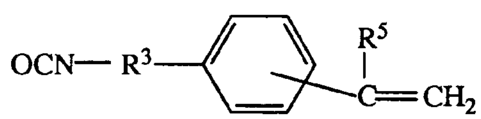

preferably in equivalent amounts, but less or more of the equivalent amount of the styrene-isocyanate may also be used. The reaction proceeds smoothly, with or without catalyst, and is complete when no NCO-groups are detectable by IR-analysis.

Aminoalkyl substituted polysiloxanes are well known and many are commercially available, both, of structures C1 and C2. Exemplary polysiloxanes of structure C1 are those wherein $R^2$ is trimethylene and which have molecular weights of 400 to 8000. Exemplary polysiloxanes of structures C2 are those wherein $R^2$ is trimethylene, Y is $-CH_2CH_2-NH_2$ and which have molecular weights of 400 to 8000.

Exemplary styrenic isocyanates are p-isocyanatostyrene and m-isopropenyl-$\alpha$,$\alpha$-dimethyl-benzyl isocyanate (TMI).

Diisocyanates useful to form chain extended prepolymer intermediates are aliphatic, cycloaliphatic or aromatic diisocyanates selected from the group consisting of ethylene diisocyanate, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzene; bis-(4-isocyanatophenyl)methane, 1,2- and 1,4-toluene diisocyanate; 3,3'-dichloro- 4,4'-diisocyanatobiphenyl; 1,5-diisocyanatonaphthalene, hydrogenated toluene diisocyanate; 1-isocyanatomethyl-5-isocyanato-1,3,3-trimethylcyclohexane (= isophorone diisocyanate); 1,6-diisocyanato-2,2,4-(2,4,4)-trimethylhexane, 2,2'-diisocyanatodiethyl fumarate; 1,5-diisocyanato-1-carboxypentane; 1,2-, 1,3-, 1,6-, 1,7-, 1,8-, 2,7- and 2,3-diisocyanatonaphthalene; 2,4- and 2,7-diisocyanato-1 methylnaphthalene; 1,4-diisocyanato-methylcyclohexane; 1,3- diisocyanato-6(7)-methylnaphthalene; 4,4'-diisocyanatobiphenyl; 4,4'-diisocyanato-3,3'-dimethoxy-biphenyl; 3,3'- and 4,4'-diisocyanato-2,2'-dimethyl-biphenyl; bis-(4-isocyanato-phenyl)ethane; bis(4-isocyanato-phenyl) ether.

The most preferred diisocyanates are isophorone diisocyanate, 2,2,4-(2,4,4)-trimethylhexane-1,6-diisocyanate and 1,2- or 1,4-toluene diisocyanate.

The diisocyanates can be used in molar ratios of amino functional polysiloxane:diisocyanate of 100:1 to 4:3.

The reaction can be carried out in bulk or in a suitable aprotic solvent, such as a ketone, ester, amide, or ether, typical solvents are methyl ethyl ketone, methyl propyl ketone, isopropyl acetate, N,N-dimethyl-formamide, dipropylene glycol dimethyl ether, and dimethyl sulfoxide.

Instead of the aforementioned aprotic, nonreactive solvents, aprotic vinyl monomers can also be used as solvents if the final desired polymer is a copolymer of A1 or A2 and a vinyl monomer. If chain extended polysiloxanes are used, they are prepared in a first reaction step by reaction of the diisocyanate with the amino-polysiloxane.

The styrenic unsaturated polysiloxanes can be used by themselves to produce by radiation-or heat-initiated polymerization coatings and films. Preferably though the unsaturated polysiloxanes of the present invention are used in combination with other vinyl monomers to make crosslinked polysiloxane-polyvinyl-block copolymers. Such copolymers are also an object of this invention.

The great variety of monomeric reactants makes it possible to prepare either hard, highly crosslinked copolymers with suitable acrylic, methacrylic or other vinyl monomers, or to prepare soft, rubber-like copolymers with low crosslink density.

It is also possible to prepare by copolymerization with hydrophilic monomers polysiloxane-hydrogels with water contents ranging up to 80%.

Reactive monomers which can be employed together with the unsaturated polysiloxane include mono- or poly-ethylenically unsaturated monomers which undergo polymerization upon exposure to UV-radiation or by chemical initiation.

If the polyunsaturated polysiloxanes are to be used in biocompatible materials, especially in either hard or soft contact lenses, a balance of hydrophilic and hydrophobic properties is required and water-soluble as well as water-insoluble comonomers can be used.

The water-insoluble vinyl monomers ($B_1$) useful in the present invention comprise: Acrylates and methacrylates of the general structure:

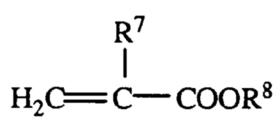

acrylamides and methacrylamides of structure:

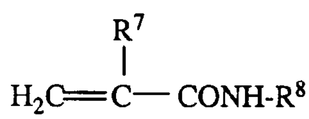

maleates, fumarates and itaconates of structures:

$$R^8OOC—HC=CH—COOR^8$$ or 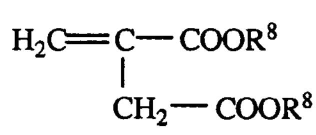

vinyl esters:

$$R^8\text{-}COO\text{-}CH=CH_2$$

and

vinyl ethers:

$$CH_2=CH\text{-}O\text{-}R^8,$$

wherein $R^7$ is hydrogen or methyl, and $R^8$ is a linear or branched aliphatic, cycloaliphatic or aromatic group with from 1 to 21 carbon atoms, e.g. an alkyl, cycloalkyl or phenyl group, and which may contain ether or thioether linkages or a -CO- group; $R^8$ may also be a heterocyclic group containing oxygen, sulfur or nitrogen atoms, or a polypropylene oxide or poly-n-butylene oxide group with from 2 to 50 repeating alkoxy units.

In addition, the $R^8$ group may contain halogen atoms, especially fluorine in form of pefluorinated alkyl groups with from 1 to 12 carbon atoms; or it may be or contain a siloxane group with from one to six Si atoms; and may contain -SO- and $-SO_2$ groups. When $R^8$ is part of a fumarate, maleate or itaconate, one of $R^8$ may be hydrogen.

Included among the useful monomers are: methyl-; ethyl-; propyl-; isopropyl-; butyl-; isobutyl-; tert.-butyl-; ethoxyethyl-; methoxyethyl-; benzyl-; 4-tert.-butylphenyl-; cyclohexyl-; trimethylcyclohexyl-; isobornyl-; dicyclopentadienyl-; norbornylmethyl-; cyclododecyl-; 1, 1,3,3-tetramethylbutyl-; n-butyl-; n-octyl-; 2-ethylhexyl-; decyl-; dodecyl-; tridecyl-; octadecyl-; glycidyl-; ethylthioethyl-; furfuryl-; 2-ethoxyethyl, 2-methoxyethyl, 2-butoxyethyl, 2-(2-ethoxyethoxy)ethyl-; hexafluoroisopropyl-; 1, 1,2,2-tetrahydroperfluorododecyl-; tri-, tetra- or penta-siloxanyl silyl propylacrylates and methacrylates, especially tris(trimethylsiloxy) silyl-propyl methacrylate, as well as the corresponding amides; N-(1,1-dimethyl-3-oxobutyl)-acrylamide; mono- and dimethyl fumarate, maleate and itaconate; diethyl fumarate; isopropyl and diisopropyl fumarate and itaconate; mono- and diphenyl and methyl-phenyl fumarate and itaconate; methyl vinyl ether and methoxyethyl vinyl ether; vinyl acetate, vinyl propionate, vinyl benzoate, acrylonitrile, styrene, alpha-methyl styrene and tert.-butylstyrene.

Water-soluble monomers ($B_2$) which are also useful comonomers in the present invention comprise acrylates and methacrylates of the general structure:

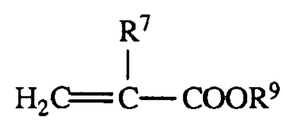

Acrylamides and methacrylamides of structure

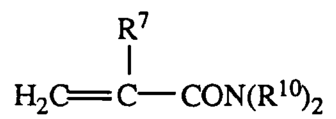

Maleates and fumarates; or itaconates of structures:

$$R^9OOC-HC=CH-COOR^9$$ or

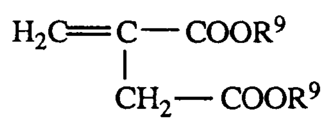

and
vinyl ethers of structure:

$$CH_2=CH-O-R^9,$$

wherein $R^9$ is a hydrocarbon residue of 1 to 10 carbon atoms substituted by one or more water solubilizing groups such as carboxy, hydroxy or tert.-amino, or a polyethylene oxide group with from 2-100 repeating units, or a group which contains sulfate, phosphate, sulfonate or phosphonate groups; $R^7$ is hydrogen or methyl and wherein $R^{10}$ is independently hydrogen or an alkyl group with 1 to 4 carbon atoms; likewise useful as comonomers are also N-vinyl-lactams, like N-vinyl-2-pyrrolidone.

Included among the useful water soluble monomers are: 2-hydroxyethyl-; 2- and 3-hydroxypropyl-, 2,3-dihydroxypropyl-; poly-ethoxyethyl-; and polyethoxypropylacrylates and methacrylates as well as the corresponding acrylamides and methacrylamides. Sucrose-, mannose-, glucose-, sorbitol acrylates and methacrylates; and di-(2-hydroxyethyl) maleate; acrylamide and methacrylamide, N-methylacrylamide and methacrylamide, bisacetone-acrylamide; N-(2-hydroxyethyl)acrylamide; N,N-dimethyl-acrylamide and -methacrylamide; methylol acrylamide and -methacrylamide; N-vinylformamide and N-vinylacetamide; N,N-dimethyl- and N,N-diethyl-aminoethyl acrylate and methacrylate as well as the corresponding acrylamides and methacrylamides, N-tert.-butylaminoethyl methacrylate and methacrylamide; 2- and 4-vinylpyridine; 4- and 2-methyl-5-vinylpyridine; N-methyl-4-vinyl piperidine; 1-vinyl- and 2-methyl- 1-vinylimidazole; para- and orthoaminostyrene; dimethylaminoethyl vinyl ether, N-vinylpyrrolidone; 2-pyrrolidinoethyl methacrylate; acrylic and methacrylic acid; itaconic, cinnamic-, crotonic-, fumaric-, and maleic acids and lower hydroxyalkyl mono- and diesters thereof, such as 2-hydroxyethyl- and di(2-hydroxy)ethyl fumarate, maleate and itaconate, and 3-hydroxypropyl butyl fumarate, and di-(polyalkoxy)alkyl-fumarates, maleates and itaconates; maleic-anhydride; sodium acrylate and methacrylate, 2-methacryloyloxyethylsulfonic acid, 2- acrylamido-2-methyl-propanesulfonic acid, 2-phosphatoethyl methacrylate, vinylsulfonic acid, sodium vinylsulfonate, p-styrenesulfonic acid, sodium p-styrenesulfonate, and allylsulfonic acid.

Also included are the quaternized derivatives of cationic monomers obtained by quaternization with selected alkylating agents like halogenated hydrocarbons such as methyl iodide, benzyl chloride or hexadecyl chloride; epoxides like glycidol, epichlorohydrin, ethylene oxide; dimethyl sulfate; methyl sulfate; propane sultone.

Preferred monomers for making hard polymers are, in amount of 10 to 90% (w/w): methyl methacrylate, cyclohexyl methacrylate, trimethylcyclohexyl methacrylate, isobornyl methacrylate, isopropyl methacrylate, isobutyl methacrylate, tert.-butyl methacrylate; trifluoroethyl methacrylate, hexafluorisopropyl methacrylate, or 1,1-dihydroheptafluorobutyl methacrylate; styrene, tert.-butylstyrene, or mixtures thereof, and tris-(trimethylsiloxy)silylpropyl methacrylate.

For soft polymers the preferred monomers are: methyl acrylate; 2-ethylhexyl acrylate, n-butyl acrylate, n-butyl methacrylate, n-octyl acrylate, 2-ethoxyethyl acrylate, 2-methoxy-ethyl acrylate and methacrylate, tris-(trimethylsiloxy)silylpropyl methacrylate and $R_f$- alkylene acrylate and methacrylate, where $R_f$ is a perfluoroalkyl group with 1 to 20 carbon atoms and alkylene is $C_1$-$C_4$-alkylene. Preferred comonomers for making hydrogels are: 2-hydroxyethyl methacrylate; 2-hydroxyethyl acrylate; N,N-dimethylacrylamide; acrylic and methacrylic acid, N-vinyl-2-pyrrolidone or mixtures thereof.

A wide range of polyvinyl compounds ($B_3$) can be used in addition to the monovinyl compounds. Indeed, from 0 to 50% by weight of the total monomer can be e.g. a di- or triolefinic monomer, for example:

Allyl acrylate and methacrylate, ethylene glycol-, diethylene glycol-, triethylene glycol-, tetraethylene glycol-, and generally polyethylene oxide glycol diacrylates and dimethacrylates; 1,4-butanediol and poly-n-butylene oxide glycol diacrylates and dimethacrylates; propylene glycol and polypropylene oxide glycol diacrylates and dimethacrylates; thiodiethylene glycol diacrylate and dimethacrylate; neopentylene glycol diacrylate and dimethacrylate; trimethylolpropane tri- and tetraacrylate; pentaerythritol tri- and tetraacrylate; divinylbenzene; divinyl ether, divinyl sulfone; 1,3-bis (3-methacryloxy propyl) tetramethyl disiloxane, 1,3-bis (3-methacryloxypropyl) tetra (trimethylsiloxy) disiloxane and the corresponding acrylates; bisphenol A diacrylate or dimethacrylate; methylene bisacrylamide or methacrylamide, dimethylene bisacrylamide or methacrylamide; N,N'-dihydroxyethylene bisacrylamide or methacrylamide; hexamethylene bisacrylamide or methacrylamide; decamethylene bisacrylamide or methacrylamide; allyl- and diallyl maleate, triallyl melamine, diallyl itaconate, diallyl phthalate, triallyl phosphite, polyallyl sucrose, sucrose diacrylate, glucose dimethacrylate; also, unsaturated polyesters, such as poly-(alkylene-glycol maleates) and poly(alkylene-glycol fumarates), like poly(propylene glycol maleate) and poly(polyalkyleneoxide glycol maleate).

Macromeric divinyl compounds can also be used for copolymerization like polyethylene oxide dimethacrylates, polytetraethylene oxide dimethacrylates (US-A-4,192,827) or polysiloxane dimethacrylates, (US-A-4,605,712) or pefluoroether dimethacrylates.

The polyvinyl-polysiloxanes of this invention are used either by themselves or together with the mentioned comonomers to make oxygen permeable polymers in a last synthesis step by free radical copolymerization, either in bulk or in the presence of small amounts of solvents. The polymerization is suitably carried out with a free radical generating initiator at a temperature in the range from about 40°C to about 105°C, the preferred temperature ranges being between about 50°C and about 100°C. These initiators are preferably peroxides or azo catalysts having a half-life at the polymerization temperature of at least 20 minutes. Typical useful peroxy compounds include: isopropyl percarbonate, tert.-butyl peroctoate, benzoyl peroxide, lauryl peroxide, decanoyl peroxide, acetyl peroxide, succinic acid peroxide, methyl ethyl ketone peroxide, tert.-butyl peroxyacetate, pelargonyl 2,5-dimethyl-2,5-bis(2-ethyl-hexanoylperoxy) hexane, p-chlorobenzoyl peroxide, tert.-butylperoxybutyrate, tert.-butyl peroxymaleic acid, tert.-butylperoxy-isopropyl carbonate, bis(1-hydroxy-cyclohexyl) peroxide; azo compounds including 2,2'-azo-bisisobutyronitrile; 2,2'-azo-bis-(2,4-dimethylvaleronitrile); 1,1'-azo-bis(cyclohexane carbonitrile), 2,2'-azo-bis(2,4-dimethyl-4-methoxy-valeronitrile).

Other free radical generating mechanisms can be employed, such as X-rays, electron-beams and UV-radiation. Preparation of contact-lens blanks by UV radiation in the presence of a photo-initiator such as diethoxyaceto-phenone, 1-hydroxycyclohexyl phenylketone, 2,2-dimethoxy-2-phenylacetophenone, phenothiazine, diisopropylxanthogen disulfide, benzoin and benzoin derivatives is a preferred method.

The amount of initiator can vary from 0.002% to 1% by weight of the monomer and macromer, but is preferably from 0.03 to 0.3% by weight thereof.

A preferred laboratory method of preparing the polymer, in the form of a cylinder, comprises the filling of

flexible polymer tubing with the preferred composition of macromer, monomers, and catalyst and reacting the mixture for approximately 2 hours at 80°C. The finished article is removed by slitting the tubing longitudinally and stripping it away from the polymer article.

Another preferred method for preparing the polymer is by radiation with ultraviolet light in the presence of a photo-initiator and using plastic molds which are UV transparent, such as molds made of polypropylene or other UV-permeable plastics, or by making coatings and films by UV-curing.

The polymerization is preferably carried out in an inert atmosphere if done in open molds. It is known that oxygen inhibits polymerization and gives rise to extended polymerization times. If closed molds are used to form the article, the molds are composed of inert materials having low oxygen permeability and non-stick properties. Examples of suitable molding materials are poly(tetrafluoroethylene), such as TEFLON®, silicone rubber, polyethylene, polypropylene and polyester, such as MYLAR®. Glass and metallic molds may be used if a suitable mold-releasing agent is employed.

The instant invention also relates to a polymer, suitable as a biocompatible, oxygen permeable polymer, especially for use in contact lenses, comprising the crosslinked copolymerization product of

(A) from about 10 to about 100% by weight of said polymer of a polysiloxane macromer of formula A1 or A2 having a molecular weight from about 400 to about 10,000, said macromer containing at least two terminal polymerizable olefinic groups, said groups being attached to the polysiloxane through a urea linkage, and

(B) from 90% to 0% by weight of said polymer of one or more mono-, di- or trifunctional vinyl monomers polymerizable by free radical polymerization.

More particularly, the instant invention relates to a polymer, suitable for use in contact lenses, comprising the crosslinked copolymerization product of

(A) from about 15 to about 90% by weight of said polymer of a polysiloxane macromer having a molecular weight from about 800 to about 10,000, said macromer containing two terminal, polymerizable olefinic groups, said macromer having the structure of formula A1 or A2 and

(B) from about 85 to about 10 % by weight of said polymer of water-soluble or water-insoluble monomers or mixtures thereof, said monomers being monoolefinic, diolefinic or a mixture of monoolefinic and diolefinic monomers.

The polymers of this invention can be tailored so as to be useful either as hard contact lens material or as soft contact lens material. Different comonomers and different levels of polysiloxane macromer are required to get optimal performance in either contact lens type.

In choosing the polysiloxane component and the vinyl monomer for a hard contact lens composition, it is important to arrive at a mixture which will give clear polymers with sufficient dimensional stability and oxygen permeability. Sometimes a mixture of comonomers is advantageous in avoiding phase-separation and thereby opacity. Also, it is easier to obtain clear products with polysiloxanes of relatively low molecular weight than with high molecular weight polysiloxanes. Polysiloxanes with a short chain length between crosslinks also give harder, more dimensionally stable polymers; however, their oxygen permeability is reduced compared to polysiloxanes with longer chain length and therefore lower crosslink density. By a judicious choice of monomer(s) and polysiloxane macromer, one is thus able to tailor to a considerable degree the physical properties and oxygen permeability of the instant silicone polymers, from hard and rigid to rubbery and soft. In addition to hard and soft contact lenses, because of their good tissue compatibility and oxygen permeability and strength and elasticity, the polymers of the present invention are also particularly suitable for use as intramuscular and subcutaneous implants in warm-blooded animals. For the same reasons, the materials of the present invention may be fashioned into substitute blood vessels or extra-corporeal shunts.

For preparing hard contact lenses, the preferred polymer comprises the crosslinked copolymerization product of (A) from 15 to 80% of a polysiloxane macromer of formula A1 or A2, and (B) from 85 to 20% by weight of a mixture of comonomers of which, based on the total weight of comonomers, ($B_1$) is 100 to 65% by weight of a water-insoluble monoolefinic monomers or mixtures thereof, ($B_2$) is 0 to 35% by weight of a water-soluble monoolefinic monomer or mixture thereof, and ($B_3$) is 0 to 35% by weight of a diolefinic monomer. The preferred water-insoluble monomers are methyl methacrylate, cyclohexyl methacrylate, tris(trimethyl-siloxanyl)silylpropyl methacrylate, trifluoroethyl methacrylate, hexafluoroisopropyl methacrylate, 1,1-dihydroheptafluorobutylmethacrylate, trimethylcyclohexyl methacrylate, isobornyl methacrylate, tert.-butyl methacrylate, tert.-butyl-styrene or mixtures thereof. The preferred water-soluble monomers are 2-hydroxyethyl methacrylate, N,N-dimethylacrylamide, acrylic acid, methacrylic acid, maleic anhydride or N-vinyl-2-pyrrolidone or mixtures thereof, and the preferred diolefinic monomers are ethylene glycol dimethacrylate, neopentyl glycol diacrylate or methacrylate, and bis-(3-methacryloxy propyl) tetramethyl disiloxane and bis(3-methacryloxypropyl) tetra(trimethylsiloxy) disiloxane.

A preferred embodiment of the instant polymers useful for ming hard copolymers, for instance for hard contact lenses, is the polymer comprising the copolymerization product of

(A) 20 to 75% by weight of a polysiloxane of formula A1 where $R^1$ and $R^5$ are methyl, $R^2$ is trimethylene, $R^3$ is $-C(CH_3)_2-$, and n1 is 10 to 50, and

(B) 80 to 25% by weight of a mixture of comonomers of which, based on the total weight of comonomers, is

($B_1$) 95 to 65% by weight of a water-insoluble monoolefinic monomer or mixture thereof, and

($B_2$) 5 to 35% by weight of a water-soluble monoolefinic monomer or mixture thereof.

Another preferred embodiment of the instant polymers useful for making hard copolymers, for instance hard contact lenses, is the polymer comprising the copolymerization product of

(A) 20 to 75% by weight of a polysiloxane of formula A1 where $R^1$ and $R^5$ are methyl, $R^2$ is trimethylene, $R^3$ is $-C(CH_3)_2-$, n1 is 10 to 50, y is 1, and $R^6$ is the divalent residue of isophorone diisocyanate; 2,2,4-(2,4,4)- trimethylhexane-1,6-diisocyanate or toluene diisocyanate; and

(B) 80 to 25% by weight of comonomers of which, based on the total weight of comonomers, is

($B_1$) 95 to 65% by weight of a water-insoluble monoolefinic monomer or mixture thereof,

($B_2$) 5 to 35% by weight of a water-soluble monoolefinic monomer or mixture thereof, and

($B_3$) 0 to 20% by weight of a diolefinic monomer.

A still more preferred embodiment of the instant polymer comprises the copolymerization product of

(A) 20 to 75% by weight of a polysiloxane of formula A1 where $R^1$ is methyl, and

(B) 25 to 80% by weight of a mixture of comonomers of which, based on the total weight of comonomers, is

($B_1$) 95 to 65 % by weight of a monomer selected from the group consisting of methyl methacrylate, cyclohexyl methacrylate, trimethylcyclohexyl methacrylate, isobornyl methacrylate, 2,2,2-trifluoroethyl methacrylate, hexafluoroisopropyl methacrylate, 1,1-dihydroheptafluorobutyl methacrylate, tris(trimethylsiloxy-silyl)propyl methacrylate, tert.-butyl methacrylate, styrene and tert.-butylstyrene,

($B_2$) 5 to 35% by weight of a monomer selected from the group consisting of acrylic acid, methacrylic acid, N,N-dimethylacrylamide, and maleic anhydride,

($B_3$) 0 to 20% by weight of ethylene glycol dimethacrylate, neopentyl glycol diacrylate, or bis-(3-methacryloxypropyl)-tetramethyl-disiloxane.

Another preferred embodiment of the instant polymers comprises the copolymerization product of

(A) 20 to 75% by weight of a polysiloxane of formula A2 where $R^1$ and $R^5$ are methyl, $R^2$ is trimethylene, $R^3$ is $-C(CH_3)_2-$, X is of structure (E), $R^4$ is ethylene, n1 is 10 to 50, p is 1 to 3, and

(B) 80 to 25% by weight of a mixture of comonomers of which, based on the total weight of comonomers, is

($B_1$) 95 to 65% by weight of a monomer selected from the group consisting of methyl methacrylate, cyclohexyl methacrylate, trimethylcyclohexyl methacrylate, isobornyl methacrylate, 2,2,2-trifluoroethyl methacrylate, hexafluoroisopropyl methacrylate, 1,1-dihydro-heptafluorobutyl methacrylate, tert.-butyl methacrylate, styrene, tert.-butylstyrene, and 3-methacryloxypropyl-tris(trimethylsiloxy) silane,

($B_2$) 5 to 35% by weight of a monomer selected from the group consisting of acrylic acid, methacrylic acid, N,N-dimethylacrylamide, and maleic anhydride, and

($B_3$) 0 to 20% by weight of ethylene glycol dimethacrylate or neopentyl glycol diacrylate, or bis-(3-methacryloxy propyl)-tetramethyl-disiloxane.

For preparing soft copolymers, such as soft contact lenses with low water absorption, the preferred polymer comprises the crosslinked, copolymerization product of (A) 30 to 80% by weight of a polysiloxane macromer of formula A1, and (B) 70 to 20% by weight of a mixture of comonomers of which, based on the total weight of comonomers, is ($B_1$) 100 to 89% by weight of a water-insoluble monoolefinic monomer or mixture thereof, ($B_2$) 0 to 10% by weight of a water-soluble monoolefinic monomer or mixture thereof, and ($B_3$) 0 to 1% by weight of a diolefinic monomer.

For making soft copolymers, such as soft contact lenses, the preferred water-insoluble monomers are methyl acrylate, ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate, 2-methoxyethyl-2-ethoxyethyl-acrylate and methacrylate, 2-methoxyethyl-, 2-ethoxyethyl acrylate and methacrylate, and oligosiloxanyl alkyl methacrylates having 3 to 8 silicon atoms, like tris-(trimethyl siloxanyl)-silyl-propyl-methacrylate, and $R_f$-alkylene acrylates and methacrylates, where $R_f$ a is perfluoroalkyl group with 1 to 10 carbon atoms and alkylene is alkylene with 1 to 5 carbon atoms.

For preparing hydrogels, for instance for hydrogel contact lenses, the preferred polymer comprises the crosslinked copolymerization product of 20 to 60% by weight of a polysiloxane macromer of formula A1 or A2 and (B) 80 to 40% by weight of a mixture of comonomers of which, based on the the total weight of comonomers, is ($B_1$) 0 to 30% by weight of a water-insoluble monoolefinic monomer or mixture thereof, ($B_2$) 100 to 69% by

weight of a water-soluble monoolefinic monomer or mixture thereof, and ($B_3$) 0 to 1% by weight of a diolefinic monomer.

The preferred water-soluble monomers are N,N-dimethylacrylamide, N-vinyl-2-pyrrolidone, 2-hydroxyethyl methacrylate, acrylamide or mixtures thereof.

The polysiloxane-copolymers of this invention may also be treated by any of the commonly used methods used to increase the wettability of hydrophobic surfaces, such as plasma-treatment and irradiation-grafting and oxidation.

The contact lenses made from the polymers of this invention are hydrolytically stable, biologically inert, transparent and sufficiently permeable to oxygen to allow the transport of oxygen sufficient to meet the requirements of the human cornea.

The following examples are presented for the purpose of illustration only and are not to be construed to limit the nature and scope of the instant invention in any manner whatsoever.

In the following examples, specific oxygen permeability ($O_2$-DK) is determined by measuring dissolved oxygen permeability at indicated temperatures and thickness with a CREATECH PERMEOMETER, using a polarographic electrode in an air-saturated aqueous environment and is expressed in units:

$$O_2DK = \frac{cm^3\ (STP) \times cm}{cm^2 \times sec \times cmHg}\ 10^{10}\ (barrers)$$

As reference materials for $O_2$-DK measurements, water swollen poly(2-hydroxyethyl methacrylate) (polyhema; 39% water content; a common soft-lens material) and CAB, cellulose-acetate-butyrate (an oxygen-permeable hard-lens material) are used; for hardness CAB and poly(methyl methacrylate) are used as reference materials. The $O_2$-DK, Shore-D and contact angle values for these materials are given below.

Hardness is determined using a Shore-D durometer on polished surfaces of center cut buttons of 10 mm diameter and 8 mm height.

| Reference Material | $O_2$-DK (at 0.25 mm/23°C) | Shore-D |
|---|---|---|
| poly-hema (39 % $H_2O$) | 6.5 | - |
| poly(methyl methacrylate) | <0.1 | 92 |
| cellulose-acetate-butyrate | 8.2 | 80 |

The following examples describe the synthesis of vinyl-urea capped polysiloxanes.

Example 1:

56.62 g (32.1 mmol) of an α,ω-di-propylamino-poly-(dimethylsiloxane) of 1770 MW (Shin Etsu Corp. No. X-22-161A) are placed in a 100 ml 3-neck round bottom flask fitted with a mechanical stirrer, gas inlet tube and thermometer. The diamine is cooled with an ice-water bath and kept under a dry air atmosphere. 9.97 g (64.3 mmol) 2-isocyanatoethyl methacrylate (IEM) are added and the mixture is stirred. After 30 minutes the ice-water bath is removed and the contents are stirred for an additional 4 hours. IR-analysis of the clear, light-yellow viscous liquid shows no NCO peak present (~2350 $cm^{-1}$).

Example 2:

56.52 g (32.0 mmol) of the aminopropyl-capped PDMS of example 1 are placed in a 100 ml 3-neck round bottom flask fitted with a mechanical stirrer, gas inlet tube and thermometer. The diamine is cooled with an ice-water bath and kept under a dry air atmosphere. 12.90 g (64.1 mmol) of m-isopropenyl-α,α-dimethylbenzyl isocyanate (TMI) are added while stirring. After 2 hours the mixture becomes very thick and 69.42 g of trimethylcyclohexyl methacrylate (TMMA) are added. The ice-water bath is removed and the contents are stirred for an additional 4 hours to yield a 66.1% solution of α-methylstyrene capped poly(dimethylsiloxane) in TMMA.

Example 3:

49.87 g (83.2 m equiv.) of a poly-(dimethylsiloxane) having pendant groups $-CH_2CH_2CH_2NHCH_2CH_2NH_2$ and MW 1200 (SWS-Silicones No. F-756) are placed in a 100 ml 3-neck round bottom flask fitted with a mechanical stirrer, gas inlet tube and thermometer. The contents are cooled with an ice-water bath and kept under a dry air atmosphere. 16.70 g (82.9 mmol) of m-isopropenyl-α,α-dimethylbenzyl isocyanate (TMI) are added while stirring. The mixture becomes viscous after 5 minutes and 33.36 g trimethylcyclohexyl methacrylate (TMMA) are added. The contents are stirred for an additional 3 hours to yield a α-methylstyrenic PDMS as a 66% solution in TMMA.

Example 4:

48.24 g (80.4 m equiv. amine) of the poly-amino-poly(dimethylsiloxane) of example 3 are placed in a 100 ml 3-neck round bottom flask fitted with a mechanical stirrer, gas inlet tube and thermometer. The amine is cooled with an ice-water bath and kept under a dry air atmosphere. 12.48 g (80.4 mmol) of 2-isocyanatoethyl methacrylate (IEM) are added and the mixture is stirred. After 5 minutes the mixture becomes viscous and 30.67 g TMMA are added. The ice-water bath is removed and the contents are stirred for an additional 3 hours under dry air, to yield a methacrylate functional PDMS as a 66% solution in TMMA.

The following examples describe the synthesis of Polysiloxane-Hydrogels

Example 5 :

5.76 g (3.52 mmol) of an α,ω-di-propylamino-poly-(dimethylsiloxane) of 1636 MW (Shin Etsu Corp. No. X-22-161A) and 7.18 g N,N-dimethylacrylamide are placed in a one ounce jar and stirred, forming a cloudy mixture. The mixture is cooled in an ice-water bath and 1.50 g (7.45 mmol) of m-isopropenyl-α,α-dimethylbenzyl isocyanate (TMI) added. The solution turns clear and is stirred for 2 hours. 0.29 g Benzoin methyl ether (BME) are added and dissolved. The mixture is degassed by applying vacuum and sparged with nitrogen (3 cycles), then is poured into a MYLAR-lined glass mold, held together by clamps and using 0.5 mm thick silicone cord as spacer. The mold is exposed to UV light from a SYLVANIA Blacklite-Blue fluorescent lamp for 4 hours, after which time the mold is opened and the clear, stiff polymer sheet is removed. It is cut into rectangular pieces for testing. After equilibration in distilled water, hydrogels with an equilibrium water content of 25.4% are obtained.

Example 6:

Using the procedure described in example 5, but using instead of TMI the equivalent amount of 2-isocyanatoethyl methacrylate (IEM), clear hydrogels are prepared, having an equilibrium water content of 25.8%.

Example 6a:

Cut strips of polymer from example 5 and 6 are immersed for 5 days at 80°C in aqueous base of different pH and the change in water content is determined after subsequent re-equilibration in water at pH = 7. The results are shown below:

| Polymer of Example | Equilibrium Swelling in Water (%)[1) Initial | After 5 days/80°C at pH = 14 | at pH = 10 | 24 days/80°C at pH 10 |
|---|---|---|---|---|
| 5 | 25.4 | 73 | 50 | 52 |
| 6 | 25.8 | disintegrated | 59 | 72 |

1) $\frac{\text{wet weight - dry weight x 100}}{\text{wet weight}}$

The urea-styryl based PDMS-hydrogel of example 5 is considerably more resistant to base catalyzed hydrolysis than the urea-methacrylate analog of example 6.

The following examples describe the synthesis of chain extended macromers.

Example 7:

9.045 g (5.53 m equiv. amine) of an α,ω-di-propylamino-poly-(dimethylsiloxane) of MW 1636 (Shin Etsu Corp. No. X-22-161A) are placed in a 1 oz. jar; 4.56 g of hexafluoroisopropyl methacrylate ($F_6MA$) are added and the mixture is stirred and cooled in an ice-water bath. 0.21 g (0.9546 mmol) of isophorone diisocyanate (IPDI) are added and the mixture is stirred for 2 hours at room temperature until all isocycanate has disappeared (by IR). Then 1. 85 g (9.22 mmol) m-isopropenyl-α,α-dimethylbenzylisocyanate (TMI) are added and the mixture is stirred for 2 more hours to yield a clear viscous liquid of a 70.90% solution of α-methyl styrene capped, chain extended poly(dimethylsiloxane) of MW 2426 (calculated) in $F_6MA$.

Examples 8-10:

The procedure of example 7 is repeated, but using the molar ratios of α,ω-di-propylamino-poly-(dimethyl siloxane) to IPDI as listed below:

| Example # | Mol Ratio of Diamine to IPDI | Calculated MW after Capping with equiv. TMI |
|---|---|---|
| 7 | 6:1 | 2426 |
| 8 | 4:1 | 2693 |
| 9 | 2:1 | 4023 |
| 10 | 3:2 | 6019 |

Example 11:

Using the PDMS-macromer mixture of example 2, a solution is prepared in a 100 ml jar which contains 30 g of the α-methylstyrene capped poly(dimethyl siloxane) macromer described in example 2, 18 g trimethylcyclohexyl methacrylate (TMMA), 28 g hexafluoroisopropyl methacrylate ($F_6MA$), 9 g methacrylic acid (MAA) and 15 g ethylene glycol dimethacrylate (EDMA); 0.24 g BME are added and dissolved and the clear solution is degassed in vacuo and sparged with nitrogen.

The solution is filled into round polypropylene molds of 1 cm height and 9 mm diameter, which are placed into the openings of a flat tray. The polymerization is carried out in a box sparged with nitrogen by exposure to UV light from a SYLVANIA-Blacklite Blue fluorescent lamp for seven hours. Following removal of the molds

from the boxes, the buttons are annealed at 100°C for 1 hour, cooled to room temperature and pressed out of the mold. The clear buttons are cut into slices of appropriate thickness on a bone saw for measuring hardness and oxygen permeability.

Examples 12-22:

Example 11 is repeated, but with compositions listed in the table below; all compositions contain 28% $F_6MA$ and 9% MAA. All polymers are tested as described.

| Example No. | Composition: Macromer of Ex. | Composition: Macromer % | Composition: TMMA % | Composition: EDMA % | Hardness Shore-D) | Oxygen Permeability $O_2DK$ (barrers) at 0.25 mm/21°C |
|---|---|---|---|---|---|---|
| 12 | 7 | 40 | 8 | 15 | 72 | 62 |
| 13 | 7 | 45 | 3 | 15 | 68 | 72 |
| 14 | 8 | 40 | 8 | 15 | 72 | 57 |
| 15 | 8 | 45 | 3 | 15 | 68 | 70 |
| 16 | 9 | 40 | 8 | 15 | 71 | 60 |
| 17 | 9 | 45 | 3 | 15 | 67 | 82 |
| 18 | 10 | 40 | 8 | 15 | 70 | 61 |
| 19 | 10 | 45 | 3 | 15 | 66 | 84 |
| 20 | 2 | 40 | 8 | 15 | 71 | 52 |
| 21 | 2 | 45 | 3 | 15 | 69 | 69 |
| 22 | 2 | 40 | 3 | 20 | 65 | 82 |

## Claims

**Claims for the following Contracting States : AT, BE, CH, DE, DK, FR, GB, IT, LI, LU, NL, SE**

1. A polysiloxane-urea styrenic macromer of the structure A1 or A2

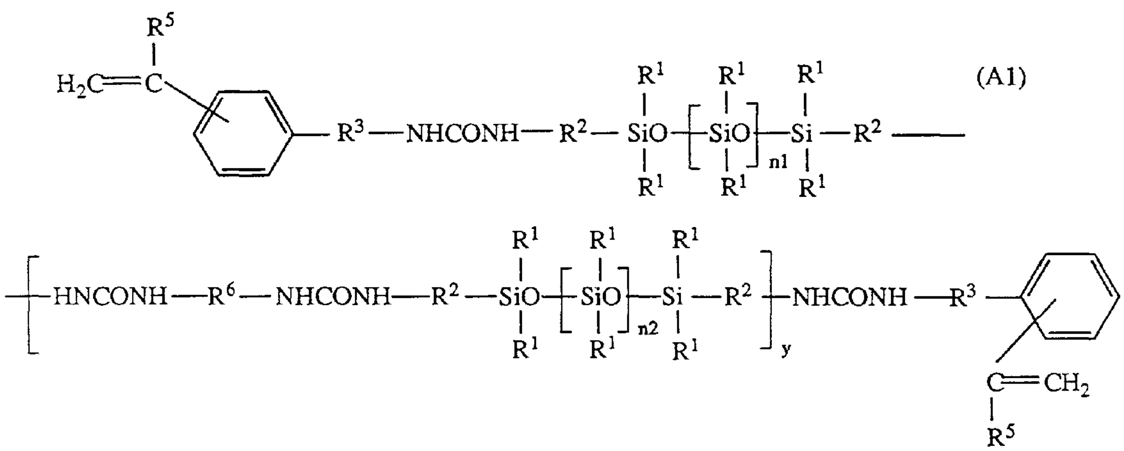

(A1)

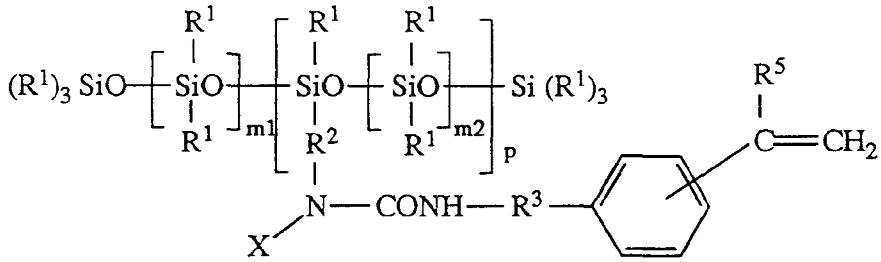 (A2)

wherein, independently of each other,
$R^1$ is methyl, phenyl or 3,3,3-trifluoropropyl,
$R^2$ is a divalent saturated linear or branched hydrocarbon radical having 1 to 6 carbon atoms,
$R^3$ is a direct bond or has the same definition as $R^2$,
$R^5$ is hydrogen or methyl,
$R^6$ is the divalent residue of an aliphatic, cycloaliphatic or aromatic diisocyanate of structure

$$OCN\text{-}R^6\text{-}NCO,$$

n1 and n2 are integers from 2 to 250, with the proviso that the sum n1 + n2 is not greater than 250,
m1 and m2 are integers from 2 to 200, with the proviso that the sum m1 + m2 is not greater than 250,
y is 0 to 2,
p has a value of 1 to 10,
X is hydrogen or has the structure E:

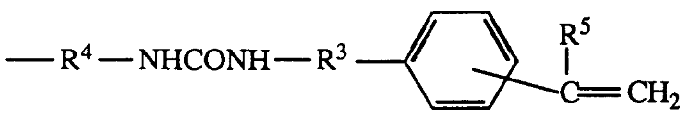 (E)

wherein $R^4$ is a divalent saturated linear or branched hydrocarbon radical having 1 to 6 carbon atoms.

2. A macromer according to claim 1 of structure A1, in which
$R^1$ is methyl,
$R^2$ is trimethylene,
$R^3$ is $-C(CH_3)_2-$
$R^5$ is methyl,
y is zero, and
n1 is 5 to 100.

3. A macromer according to claim 1 of structure A1, in which
$R^1$ is methyl,
$R^2$ is trimethylene,
$R^3$ is $-C(CH_3)_2-$
$R^5$ is methyl,
y is 1,
n1 + n2 is 10 to 20, and $R^6$ is an aliphatic or aromatic divalent residue with 6 to 12 carbon atoms.

4. A macromer according to claim 1 of structure A2, wherein
$R^1$ is methyl,
$R^2$ is trimethylene,
$R^3$ is $-C(CH_3)_2-$
$R^5$ is methyl,
X is of structure E,
$R^4$ is ethylene,
m1 and m2 are 5 to 100, with the sum of m1 + m2 not greater than 150,
and p is 1 to 3.

5. A macromer according to claim 2 of structure A1, wherein n1 is 10 to 50.

6. A macromer according to claim 1 wherein $R^3$ is a direct bond and $R^5$ is hydrogen with the $-CR^5=CH_2$ group being in the para position relevant to $R^3$; or wherein $R^3$ is $-C(CH_3)_2-$and $R^5$ is methyl with the $-CR^5=CH_2$ group being in the meta position relevant to $R^3$.

7. A macromer according to claim 1 wherein $R^6$ is derived from a diisocyanate of formula $OCN-R^6-NCO$ which is selected from the group consisting of ethylene diisocyanate, 1,2-diisocyanatopropane, 1,3-diisocyanatopropane, 1,6-diisocyanatohexane, 1,2-diisocyanatocyclohexane, 1,3-diisocyanatocyclohexane, 1,4-diisocyanatobenzene; bis-(4-isocyanatophenyl)methane, 1,2- and 1,4-toluene diisocyanate; 3,3'-dichloro-4,4'-diisocyanatobiphenyl; 1,5-diisocyanatonaphthalene, hydrogenated toluene diisocyanate; 1-isocyanatomethyl-5-isocyanato-1,3,3-trimethylcyclohexane (= isophorone diisocyanate); 1,6-diisocyanato-2,2,4-(2,4,4)-trimethylhexane, 2,2'-diisocyanatodiethyl fumarate; 1,5-diisocyanato-1-carboxypentane; 1,2-, 1,3- , 1,6-, 1,7-, 1,8-, 2,7- and 2,3-diisocyanatonaphthalene; 2,4- and 2,7-diisocyanato-1-methylnaphthalene; 1,4-diisocyanato-methylcyclohexane; 1,3-diisocyanato-6(7)-methylnaphthalene; 4,4'-diisocyanatobiphenyl; 4,4'-diisocyanato-3,3'-dimethoxy-biphenyl; 3,3'- and 4,4'-diisocyanato-2,2'-dimethylbiphenyl; bis-(4-isocyanatophenyl)ethane; bis(4-isocyanato-phenyl) ether.

8. A macromer according to claim 7 wherein the diisocyanate is isophorone diisocyanate, 2,2,4-(2,4,4)-trimethylhexane-1,6-diisocyanate or 1,2- or 1,4-toluene diisocyanate.

9. A polymer, suitable as a biocompatible, oxygen permeable polymer, useful for preparing contact lenses which comprises the crosslinked copolymerization product of
(A) from 10 to 100% by weight of said polymer of a polysiloxane macromer of formula A1 or A2 according to claim 1, having a molecular weight from about 400 to about 10,000, said macromer containing at least two terminal polymerizable olefinic groups, said groups being attached to the polysiloxane through a urea linkage, and
(B) from 90% to 0% by weight of said polymer of one or more mono-, di- or trifunctional vinyl monomers polymerizable by free radical polymerization.

10. A polymer according to claim 9 which comprises the crosslinked copolymerization product of
(A) from 15 to 90% by weight of said polymer of a polysiloxane macromer having a molecular weight from about 800 to about 10,000, said macromer containing two terminal, polymerizable olefinic groups, said macromer having the structure of formula A1 or A2, and
(B) from 85 to 10 % by weight of said polymer of water-soluble or water-insoluble monomers or mixtures thereof, said monomers being monoolefinic, diolefinic or a mixture of monoolefinic and diolefinic monomers.

11. A polymer according to claim 9 for preparing hard contact lenses which comprises the crosslinked copolymerization product of (A) from 15 to 80% of a polysiloxane macromer of formula A1 or A2, and (B) from 85 to 20% by weight of a mixture of comonomers of which, based on the total weight of comonomers, is ($B_1$) 100 to 65% by weight of a water-insoluble monoolefinic monomers or mixtures thereof, ($B_2$) 0 to 35% by weight of a water-soluble monoolefinic monomer or mixture thereof, and ($B_3$) 0 to 35% by weight of a diolefinic monomer.

12. A polymer according to claim 11 wherein $B_1$ is methyl methacrylate, cyclohexyl methacrylate, tris(trimethyl-siloxanyl)silyl-propyl methacrylate, 2,2,2-trifluoroethyl methacrylate, hexafluoroisopropyl methacrylate, 1,1-dihydroheptafluorobutylmethacrylate, trimethylcyclohexyl methacrylate, isobomyl methacrylate, tert.-butyl methacrylate, tert.-butyl-styrene or mixtures thereof; $B_2$ is 2-hydroxyethyl methacrylate, N,N-dimethylacrylamide, acrylic acid, methacrylic acid, maleic anhydride or N-vinyl-2-pyrrolidone or mixtures thereof; and $B_3$ is ethylene glycol dimethacrylate, neopentyl glycol diacrylate or methacrylate, and bis-(3-methacryloxy propyl) tetramethyl disiloxane or bis (3-methacryloxypropyl) tetra (trimethylsiloxy) disiloxane.

13. A polymer according to claim 11 which comprises the copolymerization product of
(A) 20 to 75% by weight of a polysiloxane of formula A1 where $R^1$ and $R^5$ are methyl, $R^2$ is trimethylene, $R^3$ is $-C(CH_3)_2-$, and n1 is 10 to 50, and
(B) 80 to 25% by weight of a mixture of comonomers of which, based on the total weight of comonomers, is
($B_1$) 95 to 65% by weight of a water-insoluble monoolefinic monomer or mixture thereof, and
($B_2$) 5 to 35% by weight of a water-soluble monoolefinic monomer or mixture thereof.

14. A polymer according to claim 11 which comprises the copolymerization product of
(A) 20 to 75% by weight of a polysiloxane of formula A1 where $R^1$ and $R^5$ are methyl, $R^2$ is trimethylene, $R^3$ is $-C(CH_3)_2-$, n1 is 10 to 50, y is 1, and, $R^6$ is the divalent residue of isophorone diisocyanate; 2,2,4-(2,4,4)- trimethylhexane-1,6-diisocyanate or toluene diisocyanate; and
(B) 80 to 25% by weight of comonomers of which, based on the total weight of comonomers, is
($B_1$) 95 to 65% by weight of a water-insoluble monoolefinic monomer or mixture thereof,
($B_2$) 5 to 35% by weight of a water-soluble monoolefinic monomer or mixture thereof, and
($B_3$) 0 to 20% by weight of a diolefinic monomer.

15. A polymer according to claim 11 which comprises the copolymerization product of
(A) 20 to 75% by weight of a polysiloxane of formula A1 where $R^1$ is methyl, and
(B) 80 to 25% by weight of a mixture of comonomers of which, based on the total weight of comonomers, is
($B_1$) 95 to 65% by weight of a monomer selected from the group consisting of methyl methacrylate, cyclohexyl methacrylate, trimethylcyclohexyl methacrylate, isobomyl methacrylate, 2,2,2-trifluoroethyl methacrylate, hexafluoroisopropyl methacrylate, 1,1-dihydroheptafluorobutyl methacrylate, tris(trimethylsiloxy-silyl)propyl methacrylate, tert.-butyl methacrylate, styrene and tert.-butylstyrene,
($B_2$) 5 to 35% by weight of a monomer selected from the group consisting of acrylic acid, methacrylic acid, N,N-dimethylacrylamide, and maleic anhydride,
($B_3$) 0 to 20% by weight of ethylene glycol dimethacrylate, neopentyl glycol diacrylate, or bis-(3-methacryloxypropyl)-tetramethyl-disiloxane.

16. A polymer according to claim 11 which comprises the copolymerization product of
(A) 20 to 75% by weight of a polysiloxane of formula A2 where $R^1$ and $R^5$ are methyl, $R^2$ is trimethylene, $R^3$ is $-C(CH_3)_2-$, X is of structure (E), $R^4$ is ethylene, n1 is 10 to 50, p is 1 to 3, and
(B) 80 to 25% by weight of a mixture of comonomers of which, based on the total weight of comonomers, is
($B_1$) 95 to 65 % by weight of a monomer selected from the group consisting of methyl methacrylate, cyclohexyl methacrylate, trimethylcyclohexyl methacrylate, isobomyl methacrylate, 2,2,2-trifluoroethyl methacrylate, hexafluoroisopropyl methacrylate, 1,1-dihydroheptafluorobutyl methacrylate, tert.-butyl methacrylate, styrene, tert.-butylstyrene, and 3-methacryloxypropyl-tris(trimethylsiloxy)silane,
($B_2$) 5 to 35% by weight of a monomer selected from the group consisting of acrylic acid, methacrylic acid, N,N-dimethylacrylamide, and maleic anhydride, and
($B_3$) 0 to 20% by weight of ethylene glycol dimethacrylate or neopentyl glycol diacrylate, or bis-(3-methacryloxy propyl)-tetramethyl-disiloxane.

17. A polymer according to claim 9 for soft contact lenses with low water absorption, which comprises the crosslinked, copolymerization product of (A) 30 to 80% by weight of a polysiloxane macromer of formula A1, and (B) 70 to 20 by weight of a mixture of comonomers of which, based on the total weight of comonomers, is ($B_1$) 100 to 89% by weight of a water-insoluble monoolefinic monomer or mixture thereof, ($B_2$) 0 to10% by weight of a water-soluble monoolefinic monomer or mixture thereof, and ($B_3$) 0 to 1% by weight of a diolefinic monomer.

18. A polymer according to claim 17 wherein $B_1$ is selected from the group consisting of methyl acrylate, ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate, 2-methoxyethyl-2-ethoxyethyl-acrylate and methacrylate, 2-methoxyethyl-, 2-ethoxyethyl acrylate and methacrylate, oligo-siloxanyl alkyl methacrylates having 3 to 8 silicon atoms, and $R_f$-alkylene acrylates and methacrylates, where $R_f$ is a perfluoroalkyl group with 1 to 10 carbon atoms and alkylene is alkylene with 1 to 5 carbon atoms, and mixture thereof.

19. A polymer according to claim 9 wherein the polymer comprises the crosslinked copolymerization product of (A) 20 to 60% by weight of a polysiloxane macromer of formula A1 or A2 and (B) 80 to 40% by weight of a mixture of comonomers of which, based on the the total weight of comonomers, is ($B_1$) 0 to 30% by weight of a water-insoluble monoolefinic monomer or mixture thereof, ($B_2$) 100 to 69% by weight of a water-soluble monoolefinic monomer or mixture thereof, and ($B_3$) 0 to 1% by weight of a diolefinic monomer.

20. A polymer according to claim 19, wherein component $B_2$ is N,N-dimethylacrylamide, N-vinyl-2-pyrrolidone, 2-hydroxyethyl methacrylate, acrylamide or a mixture thereof.

21. A polymer according to claim 9, in form of a contact lens.

22. A polymer according to claim 11, in form of a contact lens.

23. A polymer according to any of claims 9 to 20, in form of a contact lens.

24. A contact lens comprising a polymer according to any of claims 9 to 20.

25. A contact lens consisting essentially of a polymer according to any of claims 9 to 20.

26. A process for the manufacture of a macromer according to claim 1 comprising conventionally reacting a compound of formula C1 or C2

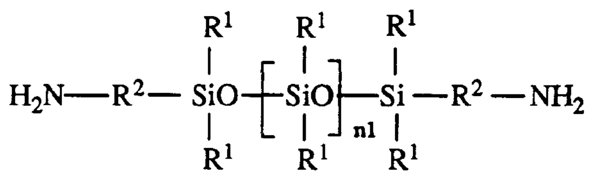

(C1)

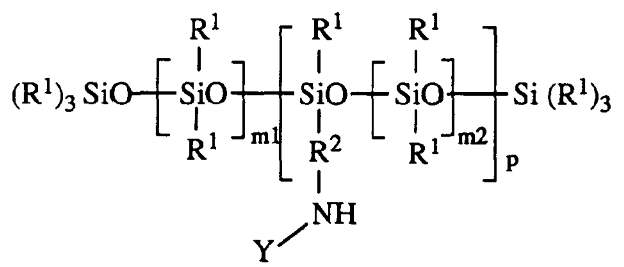

(C2)

wherein Y is hydrogen or $-R^4NH_2$ and all the other variables are as defined in claim 1, with a styrene-isocyanate of structure

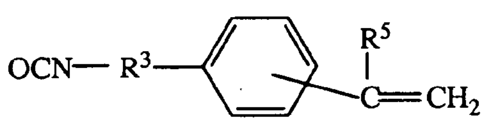

wherein the variables are as defined in claim 1, preferably in equivalent amounts; wherein a compound of formula C1, if desired, is reacted with a diisocyanate of structure $OCN-R^6-NCO$, wherein $R^6$ is as defined in claim 1, before the reaction of said compound of formula C1 with said styrene-isocyanate.

27. A process for the manufacture of a polymer according to claim 9 by conventionally copolymerizing a macromer of formula A1 or A2 as defined in claim 1 with the vinyl monomers B as defined in claim 9.

28. Use of a polymer of claim 9 for the manufacture of a contact lens.

**Claims for the following Contracting State : ES**

1. A process for the manufacture of a polysiloxane-urea styrenic macromer of the structure A1 or A2

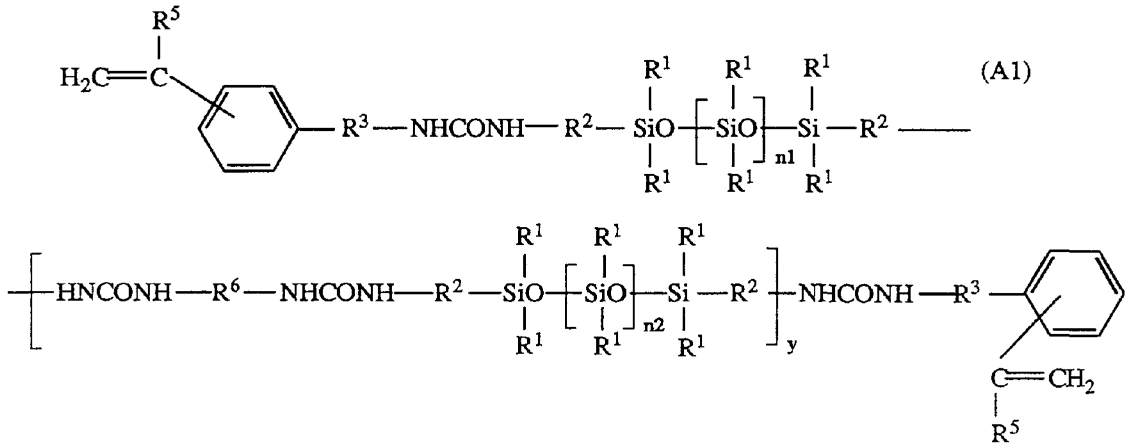

(A1)

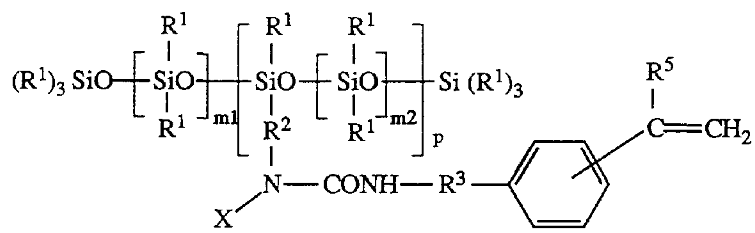

(A2)

wherein, independently of each other,
$R^1$ is methyl, phenyl or 3,3,3-trifluoropropyl,
$R^2$ is a divalent saturated linear or branched hydrocarbon radical having 1 to 6 carbon atoms,
$R^3$ is a direct bond or has the same definition as $R^2$,
R5 is hydrogen or methyl,
$R^6$ is the divalent residue of an aliphatic, cycloaliphatic or aromatic diisocyanate of structure

$$OCN\text{-}R^6\text{-}NCO,$$

n1 and n2 are integers from 2 to 250, with the proviso that the sum n1 + n2 is not greater than 250,
m1 and m2 are integers from 2 to 200, with the proviso that the sum m1 + m2 is not greater than 250,
y is 0 to 2,
p has a value of 1 to 10,
X is hydrogen or has the structure E:

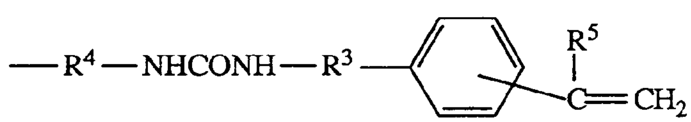

(E)

wherein $R^4$ is a divalent saturated linear or branched hydrocarbon radical having 1 to 6 carbon atoms, comprising conventionally reacting a compound of formula C1 or C2

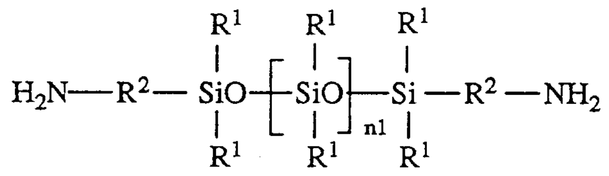

(C1)

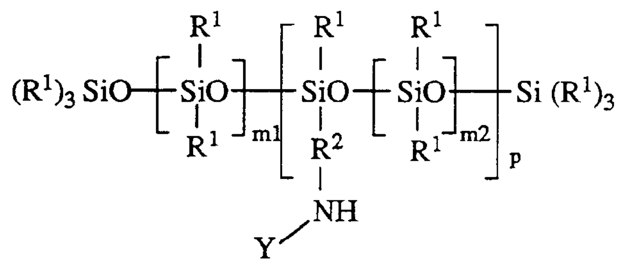

(C2)

wherein Y is hydrogen or $-R^4NH_2$ and all the other variables are as defined hereinbefore, with a styrene-isocyanate of structure

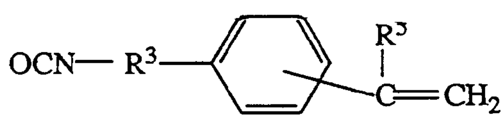

wherein the variables are as defined hereinbefore, preferably in equivalent amounts; wherein a compound of formula C1, if desired, is reacted with a diisocyanate of structure $OCN-R^6-NCO$, wherein $R^6$ is as defined hereinbefore, before the reaction of said compound of formula C1 with said styrene-isocyanate.

**2.** A process according to claim 1 for the manufacture of a macromer of structure A1, in which
$R^1$ is methyl,
$R^2$ is trimethylene,
$R^3$ is $-C(CH_3)_2-$
$R^5$ is methyl,
y is zero, and
n1 is 5 to 100.

**3.** A process according to claim 1 for the manufacture of a macromer of structure A1, in which
$R^1$ is methyl,
$R^2$ is trimethylene,
$R^3$ is $-C(CH_3)_2-$
$R^5$ is methyl,
y is 1,
n1 + n2 is 10 to 20, and $R^6$ is an aliphatic or aromatic divalent residue with 6 to 12 carbon atoms.

**4.** A process according to claim 1 for the manufacture of a macromer of structure A2, wherein
$R^1$ is methyl,
$R^2$ is trimethylene,
$R^3$ is $-C(CH_3)_2-$
$R^5$ is methyl,
X is of structure E,
$R^4$ is ethylene,
m1 and m2 are 5 to 100, with the sum of m1 + m2 not greater than 150, and p is 1 to 3.

**5.** A process according to claim 1 for the manufacture of a macromer of structure A1, wherein n1 is 10 to 50.

6. A process according to claim 1 for the manufacture of a macromer wherein $R^3$ is a direct bond and $R^5$ is hydrogen with the $-CR^5=CH_2$ group being in the para position relevant to $R^3$; or wherein $R^3$ is $-C(CH_3)_2-$ and $R^5$ is methyl with the $-CR^5=CH_2$ group being in the meta position relevant to $R^3$.

7. A process according to claim 1 for the manufacture of a macromer wherein $R^6$ is derived from a diisocyanate of formula $OCN-R^6-NCO$ which is selected from the group consisting of ethylene diisocyanate, 1,2-diisocyanatopropane, 1,3-diisocyanatopropane, 1,6diisocyanatohexane, 1,2-diisocyanatocyclohexane, 1,3-diisocyanatocyclohexane, 1,4-diisocyanatobenzene; bis-(4-isocyanatophenyl)methane, 1,2- and 1,4-toluene diisocyanate; 3,3'-dichloro- 4,4'-diisocyanatobiphenyl; 1,5-diisocyanatonaphthalene, hydrogenated toluene diisocyanate; 1-isocyanatomethyl-5-isocyanato-1,3,3-trimethylcyclohexane (= isophorone diisocyanate); 1,6-diisocyanato-2,2,4-(2,4,4)-trimethylhexane, 2,2'-diisocyanatodiethyl fumarate; 1,5-diisocyanato-1-carboxypentane; 1,2-, 1,3-, 1,6-, 1,7-, 1,8-, 2,7- and 2,3-diisocyanatonaphthalene; 2,4- and 2,7-diisocyanato-1-methylnaphthalene; 1,4-diisocyanato-methylcyclohexane; 1,3- diisocyanato-6(7)-methylnaphthalene; 4,4'-diisocyanatobiphenyl; 4,4'-diisocyanato-3,3'-dimethoxybiphenyl; 3,3'- and 4,4'-diisocyanato-2,2'-dimethyl-biphenyl; bis-(4-isocyanatophenyl)ethane; bis(4-isocyanato-phenyl) ether.

8. A process according to claim 7 for the manufacture of a macromer wherein the diisocyanate is isophorone diisocyanate, 2,2,4-(2,4,4)-trimethylhexane-1,6-diisocyanate or 1,2- or 1,4-toluene diisocyanate.

9. A process for the manufacture of a polymer, suitable as a biocompatible, oxygen permeable polymer, useful for preparing contact lenses which comprises the crosslinked copolymerization product of
   (A) from 10 to 100% by weight of said polymer of a polysiloxane macromer of formula A1 or $A^2$ according to claim 1, having a molecular weight from about 400 to about 10,000, said macromer containing at least two terminal polymerizable olefinic groups, said groups being attached to the polysiloxane through a urea linkage, and
   (B) from 90% to 0% by weight of said polymer of one or more mono-, di- or trifunctional vinyl monomers polymerizable by free radical polymerization, by conventionally copolymerizing a macromer of formula A1 or A2 as defined in claim 1 with the vinyl monomers B as defined hereinbefore.

10. A process according to claim 9 for the manufacture of a polymer which comprises the crosslinked copolymerization product of
   (A) from 15 to 90% by weight of said polymer of a polysiloxane macromer having a molecular weight from about 800 to about 10,000, said macromer containing two terminal, polymerizable olefinic groups, said macromer having the structure of formula A1 or A2, and
   (B) from 85 to 10 % by weight of said polymer of water-soluble or water-insoluble monomers or mixtures thereof, said monomers being monoolefinic, diolefinic or a mixture of monoolefinic and diolefinic monomers.

11. A process according to claim 9 for the manufacture of a polymer for preparing hard contact lenses which comprises the crosslinked copolymerization product of (A) from 15 to 80% of a polysiloxane macromer of formula A1 or A2, and (B) from 85 to 20% by weight of a mixture of comonomers of which, based on the total weight of comonomers, is ($B_1$) 100 to 65% by weight of a water-insoluble monoolefinic monomers or mixtures thereof, ($B_2$) 0 to 35% by weight of a water-soluble monoolefinic monomer or mixture thereof, and ($B_3$) 0 to 35% by weight of a diolefinic monomer.

12. A process according to claim 11 for the manufacture of a polymer wherein $B_1$ is methyl methacrylate, cyclohexyl methacrylate, tris(trimethyl-siloxanyl)silyl-propyl methacrylate, 2,2,2-trifluoroethyl methacrylate, hexafluoroisopropyl methacrylate, 1,1-dihydroheptafluorobutylmethacrylate, trimethylcyclohexyl methacrylate, isobornyl methacrylate, tert.-butyl methacrylate, tert.-butyl-styrene or mixtures thereof; $B_2$ is 2-hydroxyethyl methacrylate, N,N- dimethylacrylamide, acrylic acid, methacrylic acid, maleic anhydride or N-vinyl-2-pyrrolidone or mixtures thereof; and $B_3$ is ethylene glycol dimethacrylate, neopentyl glycol diacrylate or methacrylate, and bis-(3-methacryloxy propyl) tetramethyl disiloxane or bis(3-methacryloxypropyl) tetra (trimethylsiloxy) disiloxane.

13. A process according to claim 11 for the manufacture of a polymer which comprises the copolymerization product of
   (A) 20 to 75% by weight of a polysiloxane of formula A1 where $R^1$ and $R^5$ are methyl, $R^2$ is trimethylene, $R^3$ is $-C(CH_3)_2-$, and n1 is 10 to 50, and
   (B) 80 to 25% by weight of a mixture of comonomers of which, based on the total weight of comonomers,

is
($B_1$) 95 to 65% by weight of a water-insoluble monoolefinic monomer or mixture thereof, and
($B_2$) 5 to 35% by weight of a water-soluble monoolefinic monomer or mixture thereof.

**14.** A process according to claim 11 for the manufacture of a polymer which comprises the copolymerization product of
(A) 20 to 75% by weight of a polysiloxane of formula A1 where $R^1$ and $R^5$ are methyl, $R^2$ is trimethylene, $R^3$ is $-C(CH_3)_2-$, nl is 10 to 50, y is 1, and, $R^6$ is the divalent residue of isophorone diisocyanate; 2,2,4-(2,4,4)- trimethylhexane-1,6-diisocyanate or toluene diisocyanate; and
(B) 80 to 25% by weight of comonomers of which, based on the total weight of comonomers, is
($B_1$) 95 to 65% by weight of a water-insoluble monoolefinic monomer or mixture thereof,
($B_2$) 5 to 35% by weight of a water-soluble monoolefinic monomer or mixture thereof, and
($B_3$) 0 to 20% by weight of a diolefinic monomer.

**15.** A process according to claim 11 for the manufacture of a polymer which comprises the copolymerization product of
(A) 20 to 75% by weight of a polysiloxane of formula A1 where $R^1$ is methyl, and
(B) 80 to 25% by weight of a mixture of comonomers of which, based on the total weight of comonomers, is
($B_1$) 95 to 65% by weight of a monomer selected from the group consisting of methyl methacrylate, cyclohexyl methacrylate, trimethylcyclohexyl methacrylate, isobornyl methacrylate, 2,2,2-trifluoroethyl methacrylate, hexafluoroisopropyl methacrylate, 1,1-dihydroheptafluorobutyl methacrylate, tris(trimethylsiloxy-silyl)propyl methacrylate, tert.-butyl methacrylate, styrene and tert.-butylstyrene,
($B_2$) 5 to 35% by weight of a monomer selected from the group consisting of acrylic acid, methacrylic acid, N,N-dimethylacrylamide, and maleic anhydride,
($B_3$) 0 to 20% by weight of ethylene glycol dimethacrylate, neopentyl glycol diacrylate, or bis-(3-methacryloxypropyl)-tetramethyl-disiloxane.

**16.** A process according to claim 11 for the manufacture of a polymer which comprises the copolymerization product of
(A) 20 to 75% by weight of a polysiloxane of formula A2 where $R^1$ and $R^5$ are methyl, $R^2$ is trimethylene, $R^3$ is $-C(CH_3)_2-$, X is of structure (E), $R^4$ is ethylene, n1 is 10 to 50, p is 1 to 3, and
(B) 80 to 25% by weight of a mixture of comonomers of which, based on the total weight of comonomers, is
($B_1$) 95 to 65% by weight of a monomer selected from the group consisting of methyl methacrylate, cyclohexyl methacrylate, trimethylcyclohexyl methacrylate, isobornyl methacrylate, 2,2,2-trifluoroethyl methacrylate, hexafluoroisopropyl methacrylate, 1,1-di-hydroheptafluorobutyl methacrylate, tert.-butyl methacrylate, styrene, tert.-butylstyrene, and 3-methacryloxypropyl-tris(trimethylsiloxy)silane,
($B_2$) 5 to 35% by weight of a monomer selected from the group consisting of acrylic acid, methacrylic acid, N,N-dimethylacrylamide, and maleic anhydride, and
($B_3$) 0 to 20% by weight of ethylene glycol dimethacrylate or neopentyl glycol diacrylate, or bis-(3-methacryloxy propyl)-tetramethyl-disiloxane.

**17.** A process according to claim 9 for the manufacture of a polymer for soft contact lenses with low water absorption, which comprises the crosslinked, copolymerization product of (A) 30 to 80% by weight of a polysiloxane macromer of formula Al, and (B) 70 to 20% by weight of a mixture of comonomers of which, based on the total weight of comonomers, is ($B_1$) 100 to 89% by weight of a water-insoluble monoolefinic monomer or mixture thereof, ($B_2$) 0 to 10% by weight of a water-soluble monoolefinic monomer or mixture thereof, and ($B_3$) 0 to 1% by weight of a diolefinic monomer.

**18.** A process according to claim 17 wherein $B_1$ is selected from the group consisting of methyl acrylate, ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate, 2-methoxyethyl-2-ethoxyethyl-acrylate and methacrylate, 2-methoxyethyl-, 2-ethoxyethyl acrylate and methacrylate, oligo-siloxanyl alkyl methacrylates having 3 to 8 silicon atoms, and $R_f$-alkylene acrylates and methacrylates, where $R_f$ is a perfluoroalkyl group with 1 to 10 carbon atoms and alkylene is alkylene with 1 to 5 carbon atoms, and mixture thereof.

**19.** A process according to claim 9 for the manufacture of a polymer wherein the polymer comprises the crosslinked copolymerization product of (A) 20 to 60% by weight of a polysiloxane macromer of formula A1 or A2 and (B) 80 to 40% by weight of a mixture of comonomers of which, based on the the total weight of comonomers, is ($B_1$) 0 to 30% by weight of a water-insoluble monoolefinic monomer or mixture thereof, ($B_2$) 100 to 69% by weight of a water-soluble monoolefinic monomer or mixture thereof, and ($B_3$) 0 to 1% by weight of a diolefinic monomer.

**20.** A process according to claim 19, wherein component $B_2$ is N,N-dimethylacrylamide, N-vinyl-2-pyrrolidone, 2-hydroxyethyl methacrylate, acrylamide or a mixture thereof.

**21.** A contact lens comprising a polymer according to any of claims 9 to 20.

**22.** A contact lens consisting essentially of a polymer according to any of claims 9 to 20.

**23.** Use of a polymer of claim 9 for the manufacture of a contact lens.

## Patentansprüche

### Patentansprüche für folgende Vertragsstaaten : AT, BE, CH, DE, DK, FR, GB, GR, IT, LI, LU, NL, SE

**1.** Polysiloxan-Harnstoff-Styrol-Makromer der Struktur A1 oder A2

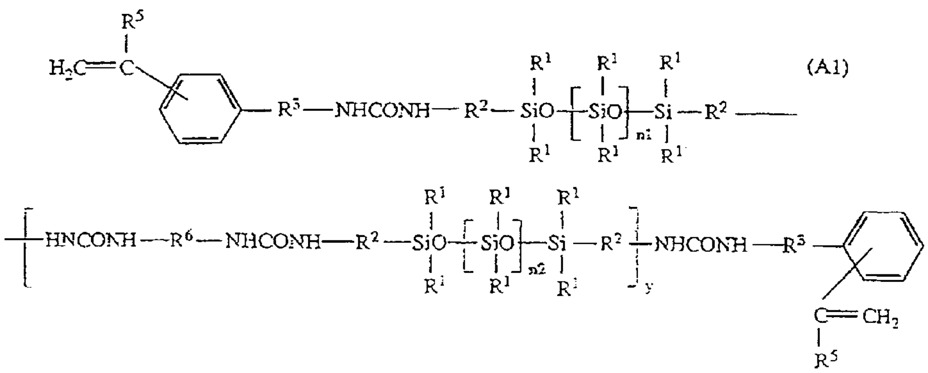
(A1)

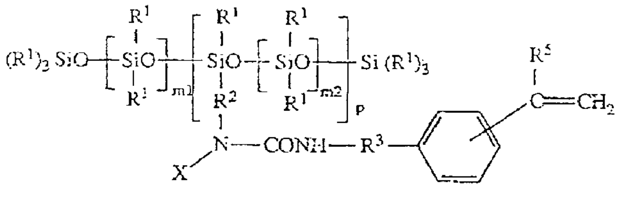
(A2)

worin, unabhängig voneinander, $R^1$ Methyl, Phenyl oder 3,3,3-Trifluorpropyl bedeutet, $R^2$ einen zweiwertigen gesättigten linearen oder verzweigten Kohlenwasserstoffrest mit 1 bis 6 Kohlenstoffatomen darstellt, $R^3$ eine direkte Bindung darstellt oder die gleiche Definition wie $R^2$ aufweist, $R^5$ Wasserstoff oder Methyl bedeutet, $R^6$ einen zweiwertigen Rest eines aliphatischen, cycloaliphatischen oder aromatischen Diisocyanats der Struktur

$$OCN-R^6-NCO$$

bedeutet, n1 und n2 jeweils ganze Zahlen von 2 bis 250 darstellen, mit der Maßgabe, daß die Summe n1 + n2 nicht größer als 250 ist, m1 und m2 ganze Zahlen von 2 bis 200 darstellen, mit der Maßgabe,

daß die Summe m1 + m2 nicht größer als 250 ist, y 0 bis 2 bedeutet, p einen Wert von 1 bis 10 aufweist, X Wasserstoff bedeutet oder die Struktur E aufweist:

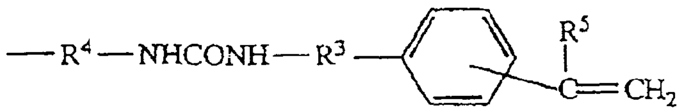

(E)

worin $R^4$ einen zweiwertigen gesättigten linearen oder verzweigten Kohlenwasserstoffrest mit 1 bis 6 Kohlenstoffatomen bedeutet.

2. Makromer nach Anspruch 1 der Struktur A1, wobei $R^1$ Methyl bedeutet, $R^2$ Trimethylen darstellt, $R^3$ $-C(CH_3)_2-$ bedeutet, $R^5$ Methyl darstellt, y Null bedeutet und n1 5 bis 100 darstellt.

3. Makromer nach Anspruch 1 der Struktur A1, wobei $R^1$ Methyl bedeutet, $R^2$ Trimethylen darstellt, $R^3$ $-C(CH_3)_2-$ bedeutet, $R^5$ Methyl darstellt, y 1 bedeutet und n1 + n2 10 bis 20 bedeutet, und $R^6$ einen aliphatischen oder aromatischen zweiwertigen Rest mit 6 bis 12 Kohlenstoffatomen darstellt.

4. Makromer nach Anspruch 1 der Struktur A2, wobei $R^1$ Methyl bedeutet, $R^2$ Trimethylen darstellt, $R^3$ $-C(CH_3)_2-$ bedeutet, $R^5$ Methyl darstellt, X die Struktur E darstellt, $R^4$ Ethylen bedeutet, m1 und m2 5 bis 100 sind, wobei die Summe von m1 + m2 nicht größer als 150 ist, und p 1 bis 3 ist.

5. Makromer nach Anspruch 2 der Struktur A1, wobei n1 10 bis 50 bedeutet.

6. Makromer nach Anspruch 1, wobei $R^3$ eine direkte Bindung bedeutet und $R^5$ ein Wasserstoffatom darstellt der Gruppe $-CR^5=CH_2$ in p-Stellung in Bezug auf $R^3$; oder wobei $R^3$ $-C(CH_3)_2-$ bedeutet und $R^5$ Methyl darstellt mit der $-CR^5=CH_2-$ Gruppe in m-Stellung in Bezug auf $R^3$.

7. Makromer nach Anspruch 1, wobei $R^6$ abgeleitet ist von einem Diisocyanat der Formel OCN-$R^6$-NCO, das ausgewählt ist aus der Gruppe, bestehend aus Ethylendiisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatobenzol; Bis-(4-isocyanatophenyl)methan, 1,2- und 1,4-Toluoldiisocyanat; 3,3'-Dichlor-4,4'-diisocyanatobiphenyl; 1,5-Diisocyanatonaphthalin, hydriertem Toluoldiisocyanat; 1-Isocyanatomethyl-5-isocyanato-1,3,3-trimethylcyclohexan (= Isophorondiisocyanat); 1,6-Diisocyanato-2,2,4-(2,4,4)-trimethylhexan, 2,2'-Diisocyanatodiethylfumarat; 1,5-Diisocyanato-1-carboxypentan; 1,2-, 1,3-, 1,6-, 1,7-, 1,8-, 2,7- und 2,3-Diisocyanatonaphthalin; 2,4- und 2,7-Diisocyanato-1-methylnaphthalin; 1,4-Diisocyanatomethylcyclohexan; 1,3-Diisocyanato-6(7)-methylnaphthalin; 4,4'-Diisocyanatobiphenyl; 4,4'-Diisocyanato-3,3'-dimethoxybiphenyl; 3,3'- und 4,4'-Diisocyanato-2,2'-dimethylbiphenyl; Bis(4-isocyanatophenyl)ethan; Bis(4-isocyanatophenyl)ether.

8. Makromer nach Anspruch 7, wobei das Diisocyanat Isophorondiisocyanat, 2,2,4-(2,4,4)-Trimethylhexan-1,6-diiso- cyanat oder 1,2- oder 1,4-Toluoldiisocyanat ist.

9. Polymer, geeignet als bioverträgliches sauerstoffpermeables Polymer, verwendbar zur Herstellung von Kontaktlinsen, umfassend das vernetzte Copolymerisationsprodukt von
(A) 10 bis 100 Gew.-% des Polymers eines Polysiloxanmakromers der Formel A1 oder A2 nach Anspruch 1 mit einem Molekulargewicht von etwa 400 bis etwa 10000, wobei das Makromer mindestens zwei endständige polymerisierbare olefinische Gruppen enthält und die Gruppen an das Polysiloxan über eine Harnstoffbindung gebunden sind und
(B) 90 bis 0 Gew.-% des Polymers eines oder mehrerer mono-, di- oder trifunktionaler Vinylmonomere, polymerisierbar durch Polymerisation über freie Radikale.

10. Polymer nach Anspruch 9, umfassend das vernetzte Copolymerisationsprodukt von
(A) 15 bis 90 Gew.-% des Polymers aus einem Polysiloxanmakromer mit einem Molekulargewicht von etwa 800 bis etwa 10000, wobei das Makromer zwei endständige polymerisierbare olefinische Gruppen enthält und das Makromer die Struktur der Formel A1 oder A2 aufweist und
(B) 85 bis 10 Gew.-% des Polymers aus wasserlöslichen oder wasserunlöslichen Monomeren oder Gemischen davon, wobei die Monomere monoolefinisch, diolefinisch oder ein Gemisch aus monoolefinischen und diolefinischen Monomeren sind.

11. Polymer nach Anspruch 9 zur Herstellung von harten Kontaktlinsen, umfassend das vernetzte Copolymerisationsprodukt von (A) 15 bis 80 % eines Polysiloxanmakromers der Formel A1 oder A2 und (B) 85 bis 20 Gew.-% eines Gemisches von Comonomeren, von denen, bezogen auf das Gesamtgewicht der Comonomere, ($B_1$) 100 bis 65 Gew.-% eines wasserunlöslichen monoolefinischen Monomers oder Gemischen davon, ($B_2$) 0 bis 35 Gew.-% eines wasserlöslichen monoolefinischen Monomers oder Gemisches davon, und ($B_3$) 0 bis 35 Gew.-% eines diolefinischen Monomers ist.

12. Polymer nach Anspruch 11, wobei $B_1$ Methylmethacrylat, Cyclohexylmethacrylat, Tris(trimethylsiloxanyl)silylpropylmethacrylat, 2,2,2-Trifluorethylmethacrylat, Hexafluorisopropylmethacrylat, 1,1-Dihydroheptafluorbutylmethacrylat, Trimethylcyclohexylmethacrylat, Isobornylmethacrylat, tert.-Butylmethacrylat, tert.-Butylstyrol oder Gemische davon bedeutet; $B_2$ 2-Hydroxyethylmethacrylat, N,N-Dimethylacrylamid, Acrylsäure, Methacrylsäure, Maleinsäureanhydrid oder N-Vinyl-2-pyrrolidon oder Gemische davon bedeutet; und $B_3$ Ethylenglycoldimethacrylat, Neopentylglycoldiacrylat oder -methacrylat, und Bis-(3-methacryloxypropyl)tetramethyldisiloxan oder Bis(3-methacryloxypropyl)tetra(trimethylsiloxy)disiloxan bedeutet.

13. Polymer nach Anspruch 11, umfassend das Copolymerisationsprodukt von
(A) 20 bis 75 Gew.-% eines Polysiloxans der Formel A1, worin $R^1$ und $R^5$ Methyl sind, $R^2$ Trimethylen ist, $R^3$ $-C(CH_3)_2-$ bedeutet und n1 10 bis 50 bedeutet und
(B) 80 bis 25 Gew.-% eines Gemisches von Comonomeren, von denen, bezogen auf das Gesamtgewicht der Comonomere,
($B_1$) 95 bis 65 Gew.-% eines wasserunlöslichen monoolefinischen Monomers oder Gemisches davon und
($B_2$) 5 bis 35 Gew.-% eines wasserlöslichen monoolefinischen Monomers oder Gemisches davon ist.

14. Polymer nach Anspruch 11, umfassend das Copolymerisationsprodukt von
(A) 20 bis 75 Gew.-% eines Polysiloxans der Formel A1, worin $R^1$ und $R^5$ Methyl darstellen, $R^2$ Trimethylen bedeutet, $R^3$ $-C(CH_3)_2-$ darstellt, n1 10 bis 50 bedeutet, y 1 ist und $R^6$ einen zweiwertigen Rest von Isophorondiisocyanat; 2,2,4-(2,4,4)-Trimethylhexan-1,6-diisocyanat oder Toluoldiisocyanat ist; und
(B) 80 bis 25 Gew.-% von Comonomeren, von denen, bezogen auf das Gesamtgewicht der Comonomere,
($B_1$) 95 bis 65 Gew.-% eines wasserunlöslichen monoolefinischen Monomers oder Gemisches davon und
($B_2$) 5 bis 35 Gew.-% eines wasserlöslichen monoolefinischen Monomers oder Gemisches davon und
($B_3$) 0 bis 20 Gew.-% eines diolefinischen Monomers ist.

15. Polymer nach Anspruch 11, umfassend das Copolymerisationsprodukt von
(A) 20 bis 75 Gew.-% eines Polysiloxans der Formel A1, wobei $R^1$ Methyl bedeutet und
(B) 80 bis 25 Gew.-% eines Gemisches von Comonomeren, von denen auf der Grundlage des Gesamtgewichtes der Comonomere,
($B_1$) 95 bis 65 Gew.-% eines Monomers ist, ausgewählt aus der Gruppe, bestehend aus Methylmethacrylat, Cyclohexyl- methacrylat, Trimethylcyclohexylmethacrylat, Isobornylmethacrylat, 2,2,2-Trifluorethylmethacrylat, Hexafluorisopropylmethacrylat, 1,1-Dihydroheptafluorbutylmethacrylat, Tris(trimethylsiloxysilyl)propylmethacrylat, tert.-Butylmethacrylat, Styrol und tert.-Butylstyrol,
($B_2$) 5 bis 35 Gew.-% eines Monomers, ausgewählt aus der Gruppe, bestehend aus Acrylsäure, Methacrylsäure, N,N-Dimethylacrylamid und Maleinsäureanhydrid,
($B_3$) 0 bis 20 Gew.-% Ethylenglycoldimethacrylat, Neopentylglycoldiacrylat oder Bis-(3-methacryloxypropyl)-tetramethyldisiloxan ist.

16. Polymer nach Anspruch 11, umfassend das Copolymerisationsprodukt von
(A) 20 bis 75 Gew.-% eines Polysiloxans der Formel A2, worin $R^1$ und $R^5$ Methyl darstellen, $R^2$ Trimethylen bedeutet, $R^3$ $-C(CH_3)_2-$ darstellt, X die Struktur (E) aufweist, $R^4$ Ethylen ist, n1 10 bis 50 bedeutet, p 1 bis 3 darstellt und
(B) 80 bis 25 Gew.-% eines Gemisches von Comonomeren, von denen auf der Grundlage des Gesamtgewichtes der Comonomere,
($B_1$) 95 bis 65 Gew.-% eines Monomers, ausgewählt aus der Gruppe, bestehend aus Methylmethacrylat, Cyclohexylmethacrylat, Trimethylcyclohexylmethacrylat, Isobornylmethacrylat, 2,2,2-Trifluorethylmethacrylat, Hexafluorisopropylmethacrylat, 1,1-Dihydroheptafluorbutylmethacrylat, tert.-Butylmethacrylat, Styrol, tert.-Butylstyrol und 3-Methacryloxypropyltris(trimethylsiloxy)silan,
($B_2$) 5 bis 35 Gew.-% eines Monomers, ausgewählt aus der Gruppe, bestehend aus Acrylsäure, Methacrylsäure, N,N-Dimethylacrylamid und Maleinsäureanhydrid und
($B_3$) 0 bis 20 Gew.-% Ethylenglycoldimethacrylat oder Neopentylglycoldiacrylat oder Bis-(3-methacryloxypropyl)-tetramethyldisiloxan ist.

**17.** Polymer nach Anspruch 9 für weiche Kontaktlinsen mit geringer Wasserabsorption, umfassend das vernetzte Copolymerisationsprodukt von (A) 30 bis 80 Gew.-% eines Polysiloxanmakromers der Formel A1 und (B) 70 bis 20 Gew.-% eines Gemisches von Comonomeren, von denen, bezogen auf das Gesamtgewicht der Comonomere, ($B_1$) 100 bis 89 Gew.-% eines wasserunlöslichen monoolefinischen Monomers oder Gemisches davon,
($B_2$) 0 bis 10 Gew.-% des wasserlöslichen monoolefinischen Monomers oder Gemisches davon und
($B_3$) 0 bis 1 Gew.-% eines diolefinischen Monomers ist.

**18.** Polymer nach Anspruch 17, worin $B_1$ ausgewählt ist aus der Gruppe, bestehend aus Methylacrylat, Acrylsäure- oder Methacrylsäureethylester, Acrylsäure- oder Methacrylsäure-n-butylester, Acrylsäure- oder Methacrylsäure-n-hexylester, Acrylsäure- oder Methacrylsäure-2-ethylhexylester, Acrylsäure- oder Methacrylsäure-n-octylester, Acrylsäure-n-decylester, Acrylsäure- oder Methacrylsäure-2-methoxyethyl-2-ethoxyethylester, 2-Methoxyethyl-, 2-Ethoxyethylacrylat und -methacrylat, Oligosiloxanylalkylmethacrylaten mit 3 bis 8 Siliziumatomen, und $R_f$-Alkylenacrylaten und -methacrylaten, wobei $R_f$ eine Perfluoralkylgruppe mit 1 bis 10 Kohlenstoffatomen bedeutet und Alkylen Alkylen mit 1 bis 5 Kohlenstoffatomen bedeutet, und Gemischen davon.

**19.** Polymer nach Anspruch 9, wobei das Polymer das vernetzte Copolymerisationsprodukt von (A) 20 bis 60 Gew.-% eines Polysiloxanmakromers der Formel A1 oder A2 und (B) 80 bis 40 Gew.-% eines Gemisches von Comonomeren, von denen auf der Grundlage des Gesamtgewichtes der Comonomere ($B_1$) 0 bis 30 Gew.% eines wasserunlöslichen monoolefinischen Monomers oder Gemisches davon, ($B_2$) 100 bis 69 Gew.-% des wasserlöslichen monoolefinischen Monomers oder Gemisches davon und ($B_3$) 0 bis 1 Gew.-% eines diolefinischen Monomers ist, umfaßt.

**20.** Polymer nach Anspruch 19, wobei Bestandteil $B_2$ N,N-Dimethylacrylamid, N-Vinyl-2-pyrrolidon, 2-Hydroxyethylmethacrylat, Acrylamid oder ein Gemisch davon ist.

**21.** Polymer nach Anspruch 9 in Form einer Kontaktlinse.

**22.** Polymer nach Anspruch 11 in Form einer Kontaktlinse.

**23.** Polymer nach einem der Ansprüche 9 bis 20 in Form einer Kontaktlinse.

**24.** Kontaktlinse, umfassend ein Polymer nach einem der Ansprüche 9 bis 20.

**25.** Kontaktlinse im wesentlichen bestehend aus einem Polymer nach einem der Anprüche 9 bis 20.

**26.** Verfahren zur Herstellung eines Makromers nach Anspruch 1, umfassend Umsetzen einer Verbindung der Formel C1 oder C2

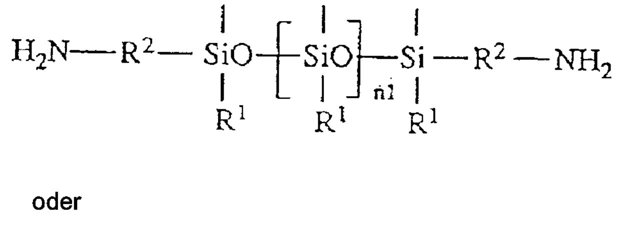

(CI)

oder

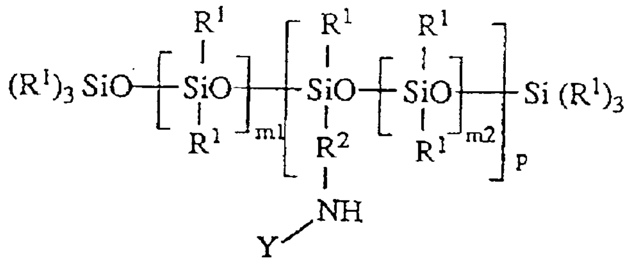

(C2)

worin Y Wasserstoff oder $-R^4NH_2$ bedeutet und alle an deren Variablen, wie in Anspruch 1 definiert sind, mit einem Styrolisocyanat der Struktur

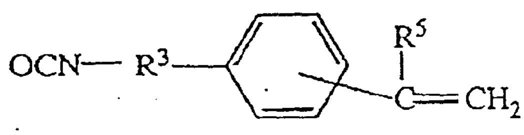

worin die Variablen wie in Anspruch 1 definiert sind, vorzugsweise in äquivalenten Mengen, in üblicher Weise; wobei eine Verbindung der Formel C1, falls erwünscht, mit einem Diisocyanat der Struktur $OCN-R^6-NCO$, in der $R^6$ wie in Anspruch 1 definiert ist, vor der Umsetzung der Verbindung der Formel C1 mit dem Styrolisocyanat, umgesetzt wird.

**27.** Verfahren zur Herstellung eines Polymers nach Anspruch 9 durch übliche Copolymerisierung eines Makromers der Formel A1 oder A2 nach Anspruch 1 mit den Vinylmonomeren B gemäß Anspruch 9.

**28.** Verwendung eines Polymers nach Anspruch 9 zur Herstellung einer Kontaktlinse.

**Patentansprüche für folgenden Vertragsstaat : ES**

**1.** Verfahren zur Herstellung eines Polysiloxan-Harnstoff-Styrol-Makromers der Struktur A1 oder A2

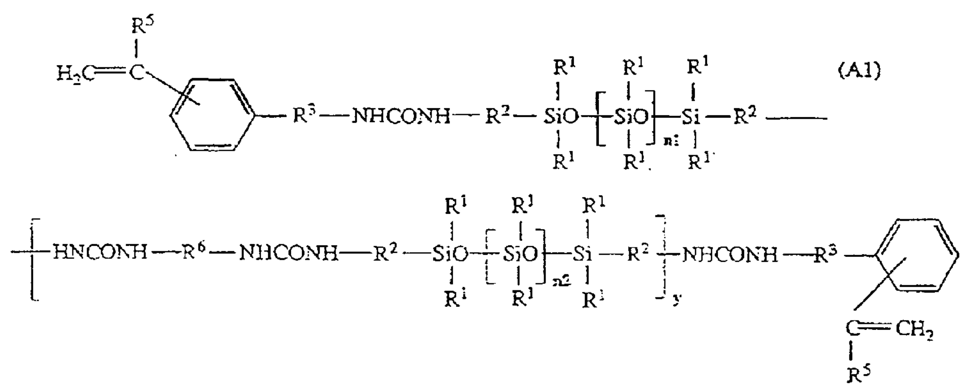

(A1)

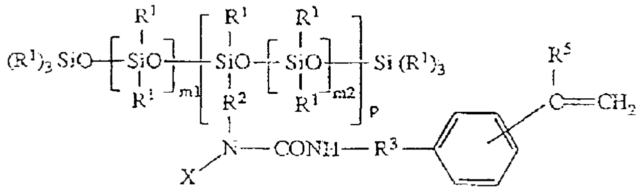

(A2)

worin, unabhängig voneinander, $R^1$ Methyl, Phenyl oder 3,3,3-Trifluorpropyl bedeutet, $R^2$ einen zweiwertigen gesättigten linearen oder verzweigten Kohlenwasserstoffrest mit 1 bis 6 Kohlenstoffatomen darstellt, $R^3$ eine direkte Bindung darstellt oder die gleiche Definition wie $R^2$ aufweist, $R^5$ Wasserstoff oder Methyl bedeutet, $R^6$ einen zweiwertigen Rest eines aliphatischen, cycloaliphatischen oder aromatischen Diisocyanats der Struktur

$$OCN\text{-}R^6\text{-}NCO$$

bedeutet, n1 und n2 jeweils ganze Zahlen von 2 bis 250 darstellen, mit der Maßgabe, daß die Summe n1 + n2 nicht größer als 250 ist, m1 und m2 ganze Zahlen von 2 bis 200 darstellen, mit der Maßgabe, daß die Summe m1 + m2 nicht größer als 250 ist, y 0 bis 2 bedeutet, p einen Wert von 1 bis 10 aufweist, X Wasserstoff bedeutet oder die Struktur E aufweist:

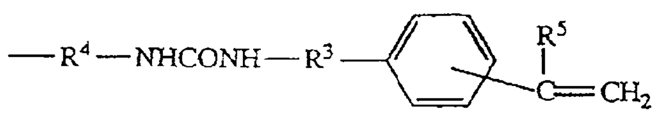

(E)

worin $R^4$ einen zweiwertigen gesättigten linearen oder verzweigten Kohlenwasserstoffrest mit 1 bis 6 Kohlenstoffatomen bedeutet,

umfassend Umsetzen einer Verbindung der Formel C1 oder C2

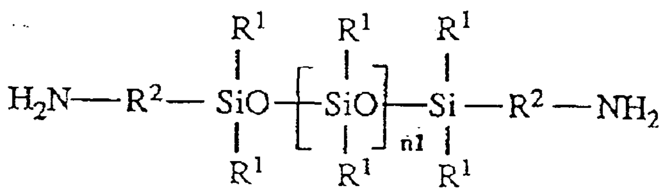

(C1)

oder

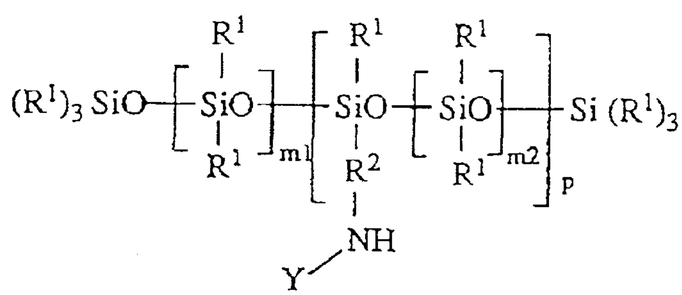

(C2)

worin Y Wasserstoff oder $-R^4NH_2$ bedeutet und alle anderen Variablen, wie vorstehend definiert sind, mit einem Styrolisocyanat der Struktur

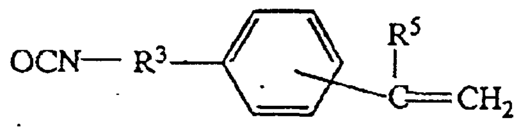

worin die Variablen wie vorstehend definiert sind, vorzugsweise in äquivalenten Mengen, in üblicher Weise; wobei eine Verbindung der Formel C1, falls erwünscht, mit einem Diisocyanat der Struktur OCN-$R^6$-NCO, in der $R^6$ wie vorstehend definiert ist, vor der Umsetzung der Verbindung der Formel C1 mit dem Styrolisocyanat, umgesetzt wird.

2. Verfahren nach Anspruch 1 zur Herstellung eines Makromers der Struktur A1, wobei $R^1$ Methyl bedeutet, $R^2$ Trimethylen darstellt, $R^3$ -$C(CH_3)_2$- bedeutet, $R^5$ Methyl dar stellt, y Null bedeutet und n1 5 bis 100 darstellt.

3. Verfahren nach Anspruch 1 zur Herstellung eines Makromers der Struktur A1, wobei $R^1$ Methyl bedeutet, $R^2$ Trimethylen darstellt, $R^3$ -$C(CH_3)_2$- bedeutet, $R^5$ Methyl darstellt, y 1 bedeutet und n1 + n2 10 bis 20 bedeutet, und $R^6$ einen aliphatischen oder aromatischen zweiwertigen Rest mit 6 bis 12 Kohlenstoffatomen darstellt.

4. Verfahren nach Anspruch 1 zur Herstellung eines Makromers der Struktur A2, wobei $R^1$ Methyl bedeutet, $R^2$ Trimethylen darstellt, $R^3$ -$C(CH_3)_2$- bedeutet, $R^5$ Methyl darstellt, X die Struktur E darstellt, $R^4$ Ethylen bedeutet, m1 und m2 5 bis 100 sind, wobei die Summe von m1 + m2 nicht größer als 150 ist, und p 1 bis 3 ist.

5. Verfahren nach Anspruch 1 zur Herstellung eines Makromers der Struktur A1, wobei nl 10 bis 50 bedeutet.

6. Verfahren nach Anspruch 1 zur Herstellung eines Makromers, wobei $R^3$ eine direkte Bindung bedeutet und $R^5$ ein Wasserstoffatom darstellt mit der Gruppe -$CR^5$=$CH_2$ in p-Stellung in Bezug auf $R^3$; oder wobei $R^3$ -$C(CH_3)_2$- bedeutet und $R^5$ Methyl darstellt mit der -$CR^5$=$CH_2$-Gruppe in m-Stellung in Bezug auf $R^3$.

7. Verfahren nach Anspruch 1 zur Herstellung eines Makromers, wobei $R^6$ abgeleitet ist von einem Diisocyanat der Formel OCN-$R^6$-NCO, das ausgewählt ist aus der Gruppe, bestehend aus Ethylendiisocyanat, 1,2-Diisocyanatopropan, 1,3-Diisocyanatopropan, 1,6-Diisocyanatohexan, 1,2-Diisocyanatocyclohexan, 1,3-Diisocyanatocyclohexan, 1,4-Diisocyanatobenzol; Bis-(4-isocyanatophenyl)methan, 1,2- und 1,4-Toluoldiisocyanat; 3,3-Dichlor-4,4'-diisocyanatobiphenyl; 1,5-Diisocyanatonaphthalin, hydriertem Toluoldiisocyanat; 1-Isocyanatomethyl-5-isocyanato-1,3,3-trimethylcyclohexan ( = Isophorondiisocyanat); 1,6-Diisocyanato-2,2,4-(2,4,4)-trimethylhexan, 2,2'-Diisocyanatodiethylfumarat; 1,5-Diisocyanato-1-carboxypentan; 1,2-, 1,3-, 1,6-, 1,7-, 1,8-, 2,7- und 2,3-Diisocyanatonaphthalin; 2,4- und 2,7-Diisocyanato-1-methylnaphthalin; 1,4-Diisocyanatomethylcyclohexan; 1,3-Diisocyanato-6(7)-methylnaphthalin; 4,4'-Diisocyanatobiphenyl; 4,4'-Diisocyanato-3,3'-dimethoxybiphenyl; 3,3'- und 4,4'-Diisocyanato-2,2'-dimethylbiphenyl; Bis-(4-isocyanatophenyl)ethan; Bis-(4-isocyanatophenyl)ether.

8. Verfahren nach Anspruch 7 zur Herstellung eines Makromers, wobei das Diisocyanat Isophorondiisocyanat, 2,2,4-(2,4,4)-Trimethylhexan-1,6-diisocyanat oder 1,2- oder 1,4-Toluoldiisocyanat ist.

9. Verfahren zur Herstellung eines Polymers, geeignet als bioverträgliches sauerstoffpermeables Polymer, verwendbar zur Herstellung von Kontaktlinsen, umfassend das vernetzte Copolymerisationsprodukt von (A) 10 bis 100 Gew.-% des Polymers eines Polysiloxanmakromers der Formel A1 oder A2 nach Anspruch 1 mit einem Molekulargewicht von etwa 400 bis etwa 10000, wobei das Makromer mindestens zwei endständige polymerisierbare olefinische Gruppen enthält und die Gruppen an das Polysiloxan über eine Harnstoffbindung gebunden sind und

(B) 90 bis 0 Gew.-% des Polymers eines oder mehrerer mono-, di- oder trifunktionaler Vinylmonomere, polymerisierbar durch Polymerisation über freie Radikale, durch übliche Copolymerisation eines Makromers der Formel A1 oder A2 gemäß Anspruch 1 mit den wie vorstehend definierten Vinylmonomeren B.

10. Verfahren nach Anspruch 9 zur Herstellung eines Polymers, umfassend das vernetzte Copolymerisationsprodukt von
(A) 15 bis 90 Gew.-% des Polymers aus einem Polysiloxanmakromer mit einem Molekulargewicht von etwa 800 bis etwa 10000, wobei das Makromer zwei endständige polymerisierbare olefinische Gruppen enthält und das Makromer die Struktur der Formel A1 oder A2 aufweist und
(B) 85 bis 10 Gew.-% des Polymers aus wasserlöslichen oder wasserunlöslichen Monomeren oder Gemischen davon, wobei die Monomere monoolefinisch, diolefinisch oder ein Gemisch aus monoolefinischen und diolefinischen Monomeren sind.

**11.** Verfahren nach Anspruch 9 zur Herstellung eines Polymers zur Fertigung von harten Kontaktlinsen, umfassend das vernetzte Copolymerisationsprodukt von (A) 15 bis 80 % eines Polysiloxanmakromers der Formel A1 oder A2 und (B) 85 bis 20 Gew.-% eines Gemisches von Comonomeren, von denen, bezogen auf das Gesamtgewicht der Comonomere ($B_1$), 100 bis 65 Gew.-% eines wasserunlöslichen monoolefinischen Monomers oder Gemischen davon, ($B_2$) 0 bis 35 Gew.-% eines wasserlöslichen monoolefinischen Monomers oder Gemisches davon, und ($B_3$) 0 bis 35 Gew.-% eines diolefinischen Monomers ist.

**12.** Verfahren nach Anspruch 11 zur Herstellung eines Polymers, wobei $B_1$ Methylmethacrylat, Cyclohexylmethacrylat, Tris(trimethylsiloxanyl)silylpropylmethacrylat, 2,2,2-Trifluorethylmethacrylat, Hexafluorisopropylmethacrylat, 1,1-Dihydroheptafluorbutylmethacrylat, Trimethylcyclohexylmethacrylat, Isobornylmethacrylat, tert.-Butylmethacrylat, tert.-Butylstyrol oder Gemische davon bedeutet; $B_2$ 2-Hydroxyethylmethacrylat, N,N-Dimethylacrylamid, Acrylsäure, Methacrylsäure, Maleinsäureanhydrid oder N-Vinyl-2-pyrrolidon oder Gemische davon bedeutet; und $B_3$ Ethylenglycoldimethacrylat, Neopentylglycoldiacrylat oder -methacrylat, und Bis-(3-methacryloxypropyl)tetramethyldisiloxan oder Bis(3-methacryloxypropyl)-tetra(trimethylsiloxy)disiloxan bedeutet.

**13.** Verfahren nach Anspruch 11 zur Herstellung eines Polymers, umfassend das Copolymerisationsprodukt von
(A) 20 bis 75 Gew.-% eines Polysiloxans der Formel A1, worin $R^1$ und $R^5$ Methyl sind, $R^2$ Trimethylen ist, $R^3$ $-C(CH_3)_2-$ bedeutet und nl 10 bis 50 bedeutet und
(B) 80 bis 25 Gew.-% eines Gemisches von Comonomeren, von denen, bezogen auf das Gesamtgewicht der Comonomere,
($B_1$) 95 bis 65 Gew.-% eines wasserunlöslichen monoolefinischen Monomers oder Gemisches davon und
($B_2$) 5 bis 35 Gew.-% eines wasserlöslichen monoolefinischen Monomers oder Gemisches davon ist.

**14.** Verfahren nach Anspruch 11 zur Herstellung eines Polymers, umfassend das Copolymerisationsprodukt von
(A) 20 bis 75 Gew.-% eines Polysiloxans der Formel A1, worin $R^1$ und $R^5$ Methyl darstellen, $R^2$ Trimethylen bedeutet, $R^3$ $-C(CH_3)_2-$ darstellt, n1 10 bis 50 bedeutet, y 1 ist und $R^6$ einen zweiwertigen Rest von Isophorondiisocyanat; 2,2,4-(2,4,4)-Trimethylhexan-1,6-diisocyanat oder Toluoldiisocyanat ist; und
(B) 80 bis 25 Gew.-% von Comonomeren, von denen, bezogen auf das Gesamtgewicht der Comonomere,
($B_1$) 95 bis 65 Gew.-% eines wasserunlöslichen monoolefinischen Monomers oder Gemisches davon,
($B_2$) 5 bis 35 Gew.-% eines wasserlöslichen monoolefinischen Monomers oder Gemisches davon und
($B_3$) 0 bis 20 Gew.-% eines diolefinischen Monomers ist.

**15.** Verfahren nach Anspruch 11 zur Herstellung eines Polymers, umfassend das Copolymerisationsprodukt von
(A) 20 bis 75 Gew.-% eines Polysiloxans der Formel A1, wobei $R^1$ Methyl bedeutet und
(B) 80 bis 25 Gew.-% eines Gemisches von Comonomeren, von denen auf der Grundlage des Gesamtgewichtes der Comonomere,
($B_1$) 95 bis 65 Gew.-% eines Monomers ist, ausgewählt aus der Gruppe, bestehend aus Methylmethacrylat, Cyclohexylmethacrylat, Trimethylcyclohexylmethacrylat, Isobornylmethacrylat, 2,2,2-Trifluorethylmethacrylat, Hexafluorisopropylmethacrylat, 1,1-Dihydroheptafluorbutylmethacrylat, Tris(trimethylsiloxysilyl)propylmethacrylat, tert.-Butylmethacrylat, Styrol und tert.-Butylstyrol,
($B_2$) 5 bis 35 Gew.-% eines Monomers, ausgewählt aus der Gruppe, bestehend aus Acrylsäure, Methacrylsäure, N,N-Dimethylacrylamid und Maleinsäureanhydrid,
($B_3$) 0 bis 20 Gew.-% Ethylenglycoldimethacrylat, Neopentylglycoldiacrylat oder Bis-(3-methacryloxypropyl)-tetramethyldisiloxan ist.

16. Verfahren nach Anspruch 11 zur Herstellung eines Polymers, umfassend das Copolymerisationsprodukt von

(A) 20 bis 75 Gew.-% eines Polysiloxans der Formel A2, worin $R^1$ und $R^5$ Methyl darstellen, $R^2$ Trimethylen bedeutet, $R^3$ $-C(CH_3)_2-$ darstellt, X die Struktur (E) aufweist, $R^4$ Ethylen ist, n1 10 bis 50 bedeutet, p 1 bis 3 darstellt und

(B) 80 bis 25 Gew.-% eines Gemisches von Comonomeren, von denen auf der Grundlage des Gesamtgewichtes der Comonomere,

($B_1$) 95 bis 65 Gew.-% eines Monomers, ausgewählt aus der Gruppe, bestehend aus Methylmethacrylat, Cyclohexylmethacrylat, Trimethylcyclohexylmethacrylat, Isobornylmethacrylat 2,2,2-Trifluorethylmethacrylat, Hexafluorisopropyl methacrylat, 1,1-Dihydroheptafluorbutylmethacrylat, tert.-Butylmethacrylat, Styrol, tert.-Butylstyrol und 3-Methacryloxypropyl-tris(trimethylsiloxy)silan,

($B_2$) 5 bis 35 Gew.-% eines Monomers, ausgewählt aus der Gruppe, bestehend aus Acrylsäure, Methacrylsäure, N,N-Dimethylacrylamid und Maleinsäureanhydrid und

($B_3$) 0 bis 20 Gew.-% Ethylenglycoldimethacrylat oder Neopentylglycoldiacrylat oder Bis-(3-methacryloxypropyl)-tetramethyldisiloxan ist.

17. Verfahren nach Anspruch 9 zur Herstellung eines Polymers für weiche Kontaktlinsen mit geringer Wasserabsorption, umfassend das vernetzte Copolymerisationsprodukt von (A) 30 bis 80 Gew.-% eines Polysiloxanmakromers der Formel A1 und (B) 70 bis 20 Gew.-% eines Gemisches von Comonomeren, von denen, bezogen auf das Gesamtgewicht der Comonomere, ($B_1$) 100 bis 89 Gew.-% eines wasserunlöslichen monoolefinischen Monomers oder Gemisches davon,

($B_2$) 0 bis 10 Gew.-% eines wasserlöslichen monoolefinischen Monomers oder Gemisches davon und

($B_3$) 0 bis 1 Gew.-% eines diolefinischen Monomers ist.

18. Verfahren nach Anspruch 17, worin $B_1$ ausgewählt ist aus der Gruppe, bestehend aus Methylacrylat, Acrylsäureoder Methacrylsäureethylester, Acrylsäure- oder Methacrylsäure-n-butylester, Acrylsäureoder Methacrylsäure-n-hexylester, Acrylsäure- oder Methacrylsäure-2-ethylhexylester, Acrylsäure- oder Methacrylsäure-n-octylester, Acrylsäure-n-decylester, Acrylsäure- oder Methacrylsäure-2-methoxyethyl-2-ethoxyethylester, 2-Methoxyethyl-, 2-Ethoxyethylacrylat und -methacrylat, Oligosiloxanylalkylmethacrylaten mit 3 bis 8 Siliziumatomen, und $R_f$-Alkylenacrylaten und -methacrylaten, wobei $R_f$ eine Perfluoralkylgruppe mit 1 bis 10 Kohlenstoffatomen bedeutet und Alkylen Alkylen mit 1 bis 5 Kohlenstoffatomen bedeutet, und Gemischen davon.

19. Verfahren nach Anspruch 9, wobei das Polymer das vernetzte Copolymerisationsprodukt von (A) 20 bis 60 Gew.-% eines Polysiloxanmakromers der Formel A1 oder A2 und (B) 80 bis 40 Gew.-% eines Gemisches von Comonomeren, von denen auf der Grundlage des Gesamtgewichtes der Comonomere ($B_1$) 0 bis 30 Gew.% eines wasserunlöslichen monoolefinischen Monomers oder Gemisches davon, ($B_2$) 100 bis 69 Gew.-% des wasserlöslichen monoolefinischen Monomers oder Gemisches davon und ($B_3$) 0 bis 1 Gew.-% eines diolefinischen Monomers ist, umfaßt.

20. Verfahren nach Anspruch 19, wobei Bestandteil $B_2$ N,N-Dimethylacrylamid, N-Vinyl-2-pyrrolidon, 2-Hydroxyethylmethacrylat, Acrylamid oder ein Gemisch davon ist.

21. Kontaktlinse, umfassend ein Polymer nach einem der Ansprüche 9 bis 20.

22. Kontaktlinse, bestehend im wesentlichen aus einem Polymer nach einem der Ansprüche 9 bis 20.

23. Verwendung eines Polymers nach Anspruch 9 zur Herstellung einer Kontaktlinse.

## Revendications

### Revendications pour les Etats contractants suivants : AT, BE, CH, DE, DK, FR, GB, GR, IT, LI, LU, NL, SE

1. Macromère styrénique de polysiloxane-urée de structures A1 ou A2

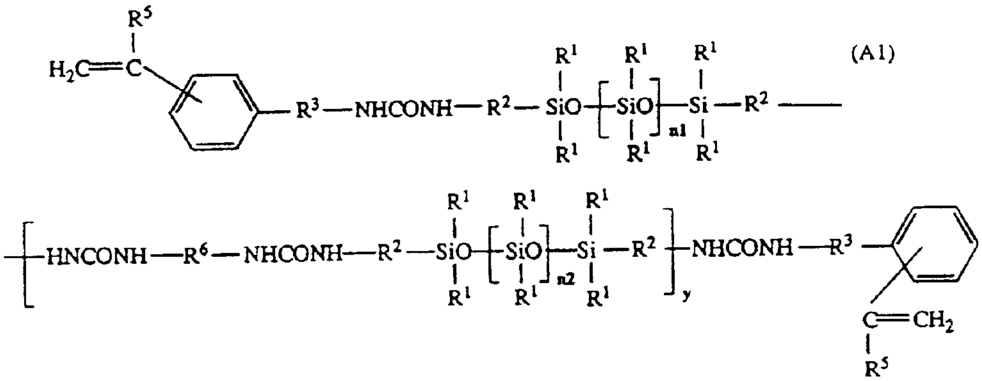

(A1)

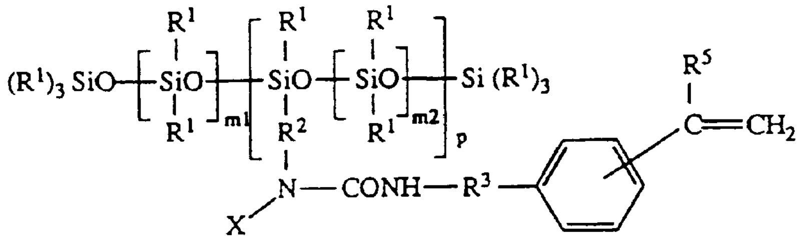

(A2)

dans lesquelles, indépendamment l'un de l'autre,
$R^1$ est un groupe méthyle, phényle ou 3,3,3-trifluoropropyle,
$R^2$ est un radical hydrocarboné linéaire ou ramifié saturé divalent ayant 1 à 6 atomes de carbone,
$R^3$ est une liaison directe ou possède la même définition que $R^2$,
$R^5$ est un atome d'hydrogène ou un groupe méthyle,
$R^6$ est le résidu divalent d'un diisocyanate aliphatique, cycloaliphatique ou aromatique de structure

$$OCN\text{-}R^6\text{-}NCO$$

n1 et n2 sont des nombres entiers de 2 à 250, à condition que la somme n1 + n2 ne dépasse pas 250,
m1 et m2 sont des nombres entiers de 2 à 200, à condition que la somme m1 + m2 ne dépasse pas 250,
y vaut de 0 à 2,
p vaut de 1 à 10, X est un atome d'hydrogène ou possède la structure E:

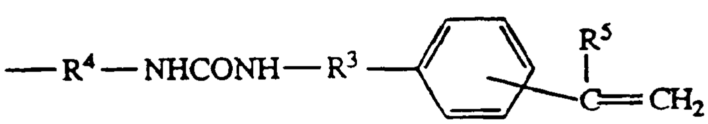

(E)

dans laquelle $R^4$ est un radical hydrocarboné ramifié ou linéaire saturé divalent ayant 1 à 6 atomes de carbone.

**2.** Macromère selon la revendication 1 de structure A1, dans lequel
$R^1$ est un groupe méthyle,
$R^2$ est un triméthylène,
$R^3$ est un groupe $-C(CH_3)_2-$
$R^5$ est un groupe méthyle,
y vaut zéro, et
n1 vaut de 5 à 100.

3. Macromère selon la revendication 1 de structure A1, dans lequel
$R^1$ est un groupe méthyle,
$R^2$ est un triméthylène,
$R^3$ est un groupe $-C(CH_3)_2-$
$R^5$ est un groupe méthyle,
y vaut 1
n1 + n2 vaut de 10 à 20, et $R^6$ est un résidu divalent aromatique ou aliphatique avec 6 à 12 atomes de carbone.

4. Macromère selon la revendication 1 de structure A2, dans lequel
$R^1$ est un groupe méthyle,
$R^2$ est un triméthylène,
$R^3$ est un groupe $-C(CH_3)_2-$
$R^5$ est un groupe méthyle,
X est de structure E,
$R^4$ est un éthylène,
m1 et m2 valent de 5 à 100, la somme m1 + m2 ne dépassant pas 150,
et p vaut de 1 à 3.

5. Macromère selon la revendication 2 de structure A1, dans lequel n1 vaut de 10 à 50.

6. Macromère selon la revendication 1, dans lequel $R^3$ est une liaison directe et $R^5$ est un atome d'hydrogène, le groupe $-CR^5=CH_2$ étant dans la position para par rapport à $R^3$; ou dans lequel $R^3$ est un groupe $-C(CH_3)_2-$ et $R^5$ est un groupe méthyle, le groupe $-CR^5=CH_2$ étant dans la position méta par rapport à $R^3$.

7. Macromère selon la revendication 1, dans lequel $R^6$ est dérivé d'un diisocyanate de formule $OCN-R^6-NCO$, qui est choisi dans le groupe formé par le diisocyanate d'éthylène, le 1,2-diisocyanatopropane, le 1,3-diisocyanatopropane, le 1,6-diisocyanatohexane, le 1,2-diisocyanatocyclohexane, le 1,3-diisocyanatocyclohexane, le 1,4-diisocyanatobenzène; le bis-(4-isocyanatophényl)méthane, le diisocyanate de 1,2- et 1,4-toluène; le 3,3'-dichloro-4,4'-diisocyanatobiphényle; le 1,5-diisocyanatonaphtalène, le diisocyanate de toluène hydrogéné; le 1-isocyanatométhyl-5-isocyanato-1,3,3-triméthylcyclohexane (= diisocyanate d'isophorone); le 1,6-diisocyanato-2,2,4-(2,4,4)-triméthylhexane, le fumarate de 2,2'-diisocyanatodiéthyle; le 1,5-diisocyanato-1-carboxypentane; le 1,2-, 1,3-, 1,6-, 1,7-, 1,8-, 2,7- et 2,3-diisocyanatonaphtalène; le 2,4- et 2,7-diisocyanato-1-méthylnaphtalène; le 1,4-diisocyanato-méthyl-cyclohexane; le 1,3-diisocyanato-6(7)-méthylnaphtalène; le 4,4'-diisocyanatobiphényle; le 4,4'-diisocyanato-3,3'-diméthoxy-biphényle; le 3,3'- et 4,4'-diisocyanato-2,2'-diméthyl-biphényle; le bis(4-isocyanatophényl )éthane; le bis(4-isocyanato-phényl)éther.

8. Macromère selon la revendication 7, dans lequel le diisocyanate est le diisocyanate d'isophorone, le 2,2,4-(2,4,4)-triméthylhexane-1,6-diisocyanate ou le diisocyanate de 1,2- ou 1,4-toluène.

9. Polymère, approprié comme polymère perméable à l'oxygène, biocompatible, utile pour préparer des lentilles de contact, qui comprend le produit réticulé de la copolymérisation
(A) de 10 à 100% en poids dudit polymère d'un macromère polysiloxane de formule A1 ou A2 selon la revendication 1, ayant une masse moléculaire d'environ 400 à environ 10 000, ledit macromère contenant au moins deux groupes oléfiniques polymérisables terminaux, lesdits groupes étant liés au polysiloxane par l'intermédiaire d'une liaison urée, et
(B) de 90% à 0% en poids dudit polymère d'un ou plusieurs monomères de vinyle mono-, di- ou trifonctionnels polymérisables par polymérisation radicalaire.

10. Polymère selon la revendication 9, qui comprend le produit réticulé de la copolymérisation
(A) de 15 à 90% en poids dudit polymère d'un macromère polysiloxane ayant une masse moléculaire d'environ 800 à environ 10 000, ledit macromère contenant deux groupes oléfiniques polymérisables terminaux, ledit macromère ayant la structure de formule A1 ou A2, et
(B) de 85 à 10% en poids dudit polymère de monomères insolubles dans l'eau ou hydrosolubles ou leurs mélanges, lesdits monomères étant monooléfiniques, dioléfiniques ou un mélange de monomères monooléfiniques et dioléfiniques.

11. Polymère selon la revendication 9 pour préparer des lentilles de contact dures, qui comprend le produit

réticulé de la copolymérisation (A) de 15 à 80% d'un macromère polysiloxane de formule A1 ou A2, et (B) de 85 à 20% en poids d'un mélange de comonomères dont, par rapport au poids total des comonomères, ($B_1$) 100 à 65% en poids sont des monomères monooléfiniques insolubles dans l'eau ou leurs mélanges, ($B_2$) 0 à 35% en poids sont un monomère monooléfinique hydrosoluble ou un de ses mélanges, et ($B_3$) 0 à 35% en poids sont un monomère dioléfinique.

**12.** Polymère selon la revendication 11, dans lequel $B_1$ est le méthacrylate de méthyle, le méthacrylate de cyclohexyle, le méthacrylate de tris(triméthylsiloxanyl)silylpropyle, le méthacrylate de 2,2,2-trifluoroéthyle, le méthacrylate d'hexafluoroisopropyle, le méthacrylate de 1,1-dihydroheptafluorobutyle, le méthacrylate de triméthylcyclohexyle, le méthacrylate d'isobornyle, le méthacrylate de tert-butyle, le tertbutylstyrène ou leurs mélanges; $B_2$ est le méthacrylate de 2-hydroxyéthyle, le N,N-diméthylacrylamide, l'acide acrylique, l'acide méthacrylique, l'anhydride maléique ou la N-vinyl-2-pyrrolidone ou leurs mélanges; et $B_3$ est le diméthacrylate d'éthylèneglycol, le diacrylate ou le méthacrylate de néopentylglycol, et le bis-(3-méthacryloxypropyl)tétraméthyldisiloxane ou le bis(3-méthacryloxypropyl)tétra-(triméthylsiloxy)disiloxane.

**13.** Polymère selon la revendication 11, qui comprend le produit de la copolymérisation

(A) de 20 à 75% en poids d'un polysiloxane de formule A1, où $R^1$ et $R^5$ sont un groupe méthyle, $R^2$ est un groupe triméthylène, $R^3$ est un groupe $-C(CH_3)_2-$, et n1 vaut de 10 à 50, et

(B) de 80 à 25% en poids d'un mélange de comonomères dont, par rapport au poids total des comonomères,

($B_1$) 95 à 65% en poids sont un monomère monoléfinique insoluble dans l'eau ou un de ses mélanges, et

($B_2$) 5 à 35% en poids sont un monomère monooléfinique hydrosoluble ou un de ses mélanges.

**14.** Polymère selon la revendication 11, qui comprend le produit de la copolymérisation

(A) de 20 à 75% en poids d'un polysiloxane de formule A1, où $R^1$ et $R^5$ sont un groupe méthyle, $R^2$ est un groupe triméthylène, $R^3$ est un groupe $-C(CH_3)_2-$, n1 vaut de 10 à 50, y vaut 1, et $R^6$ est le résidu divalent du diisocyanate d'isophorone; du 2,2,4-(2,4,4)-triméthylhexane-1,6-diisocyanate ou du diisocyanate de toluène; et

(B) de 80 à 25% en poids de comonomères dont, par rapport au poids total des comonomères,

($B_1$) 95 à 65% en poids sont un monomère monoléfinique insoluble dans l'eau ou un de ses mélanges,

($B_2$) 5 à 35% en poids sont un monomère monooléfinique hydrosoluble ou un de ses mélanges, et

($B_3$) 0 à 20% en poids sont un monomère dioléfinique.

**15.** Polymère selon la revendication 11, qui comprend le produit de la copolymérisation

(A) 20 à 75% en poids d'un polysiloxane de formule A1, où $R^1$ est un groupe méthyle, et

(B) 80 à 25% en poids d'un mélange de comonomères dont, par rapport au poids total des comonomères,

($B_1$) 95 à 65% en poids sont un monomère choisi dans le groupe constitué du méthacrylate de méthyle, du méthacrylate de cyclohexyle, du méthacrylate de triméthylcyclohexyle, du méthacrylate d'isobornyle, du méthacrylate de 2,2,2-trifluoroéthyle, du méthacrylate d'hexafluoroisopropyle, du méthacrylate de 1,1-dihydroheptafluorobutyle, du méthacrylate de tris(triméthylsiloxysilyl)propyle, du méthacrylate de tert-butyle, du styrène et du tert-butylstyrène,

($B_2$) 5 à 35% en poids sont un monomère choisi dans le groupe constitué de l'acide acrylique, de l'acide méthacrylique, du N,N-diméthylacrylamide, et de l'anhydride maléique,

($B_3$) 0 à 20% en poids sont le diméthacrylate d'éthylèneglycol, de diacrylate de néopentylglycol, ou le bis-(3-méthacryloxypropyl)-tétraméthyldisiloxane.

**16.** Polymère selon la revendication 11, qui comprend le produit de la copolymérisation

(A) 20 à 75% en poids d'un polysiloxane de formule A2, où $R^1$ et $R^5$ sont un groupe méthyle, $R^2$ est un groupe triméthylène, $R^3$ est un groupe $-C(CH_3)_2-$, X et de structure (E), $R^4$ est l'éthylène, n1 vaut de 10 à 50, p vaut de 1 à 3, et

(B) 80 à 25% en poids d'un mélange de comonomères dont, par rapport au poids total des comonomères,

($B_1$) 95 à 65% en poids sont un monomère choisi dans le groupe constitué du méthacrylate de méthyle, du méthacrylate de cyclohexyle, du méthacrylate de triméthylcyclohexyle, du méthacrylate

d'isobornyle, du méthacrylate de 2,2,2-trifluoroéthyle, du méthacrylate d'hexafluoroisopropyle, du méthacrylate de 1,1-dihydroheptafluorobutyle, du méthacrylate de tert-butyle, du styrène, du tertbutylstyrène, et du 3-méthacryloxypropyl-tris(triméthylsiloxy)silane,
($B_2$) 5 à 35% en poids sont un monomère choisi dans le groupe constitué de l'acide acrylique, de l'acide méthacrylique, du N,N-diméthylacrylamide, et de l'anhydride maléique, et
($B_3$) 0 à 20% en poids sont le diméthacrylate d'éthylèneglycol, ou le diacrylate de néopentylglycol, ou le bis-(3-méthacryloxypropyl)-tétraméthyldisiloxane.

**17.** Polymère selon la revendication 9, pour des lentilles de contact souples avec une absorption d'eau faible, qui comprend le produit réticulé de la copolymérisation
(A) 30 à 80% en poids d'un macromère polysiloxane de formule A1, et
(B) 70 à 20% en poids d'un mélange de comonomères dont, par rapport au poids total des comonomères,
($B_1$) 100 à 89% en poids sont un monomère monooléfinique insoluble dans l'eau ou un de ses mélanges,
($B_2$) 0 à 10% en poids sont un monomère monooléfinique hydrosoluble ou un de ses mélanges, et
($B_3$) 0 à 1% en poids est un monomère dioléfinique.

**18.** Polymère selon la revendication 17, dans lequel $B_1$ est choisi dans le groupe formé de l'acrylate de méthyle, de l'acrylate ou du méthacrylate d'éthyle, de l'acrylate ou du méthacrylate de n-butyle, de l'acrylate ou du méthacrylate de n-hexyle, de l'acrylate ou du méthacrylate de 2-éthylhexyle, de l'acrylate ou du méthacrylate de n-octyle, de l'acrylate de n-décyle, de l'acrylate et du méthacrylate de 2-méthoxyéthyl-2-éthoxyéthyle, de l'acrylate et méthacrylate de 2-méthoxyéthyle et de 2-éthoxyéthyle, des méthacrylates d'oligosiloxanylalkyle ayant 3 à 8 atomes de silicium, et des acrylates et méthacrylates alkylène-$R_f$, où $R_f$ est un groupe perfluoroalkyle avec 1 à 10 atomes de carbone et l'alkylène est un groupe alkylene avec 1 à 5 atomes de carbone, et leurs mélanges.

**19.** Polymère selon la revendication 9, dans lequel le polymère comprend le produit réticulé de la copolymérisation (A) 20 à 60% en poids d'un macromère polysiloxane de formule A1 ou A2, et (B) 80 à 40% en poids d'un mélange de comonomères dont, par rapport au poids total des comonomères, ($B_1$) 0 à 30% en poids sont un monomère monooléfinique insoluble dans l'eau ou un de ses mélanges, ($B_2$) 100 à 69% en poids sont un monomère monooléfinique hydrosoluble ou un de ses mélanges, et ($B_3$) 0 à 1% en poids est un monomère dioléfinique.

**20.** Polymère selon la revendication 19, dans lequel le composant $B_2$ est le N,N-diméthylacrylamide, la N-vinyl-2-pyrrolidone, le méthacrylate de 2-hydroxyéthyle, l'acrylamide ou leurs mélanges.

**21.** Polymère selon la revendication 9, en forme d'une lentille de contact.

**22.** Polymère selon la revendication 11, en forme d'une lentille de contact.

**23.** Polymère selon l'une quelconque des revendications 9 à 20, en forme d'une lentille de contact.

**24.** Lentille de contact comprenant un polymère selon l'une quelconque des revendications 9 à 20.

**25.** Lentille de contact constituée essentiellement d'un polymère selon l'une quelconque des revendications 9 à 20.

**26.** Procédé pour la fabrication d'un macromère selon la revendication 1, comprenant la réaction de façon classique d'un composé de formule C1 ou C2

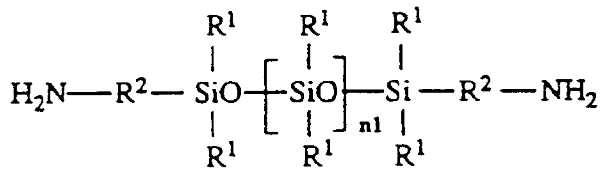

(C1)

ou

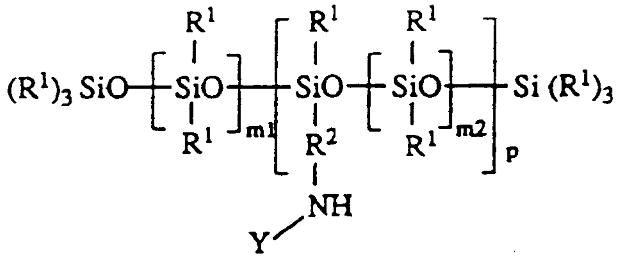

(C2)

dans laquelle Y est un atome d'hydrogène ou un groupe $-R^4NH_2$ et toutes les autres variables sont telles que définies dans la revendication 1, avec un isocyanate styrénique de structure

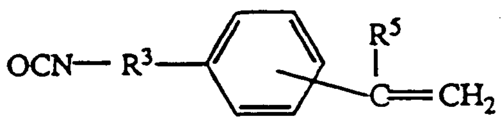

dans laquelle les variables sont telles que définies dans la revendication 1, de préférence en quantités équivalentes; dans lequel un composé de formule C1, si souhaité, est mis à réagir avec un diisocyanate de structure $OCN-R^6-NCO$, dans laquelle $R^6$ est tel que défini dans la revendication 1, avant la réaction dudit composé de formule C1 avec ledit isocyanate styrénique.

**27.** Procédé pour la fabrication d'un polymère selon la revendication 9, en copolymérisant de façon classique un macromère de formule A1 ou A2 tel que défini dans la revendication 1 avec les monomères vinyliques B, tels que définis dans la revendication 9.

**28.** Utilisation d'un polymère de la revendication 9 pour la fabrication d'une lentille de contact.

**Revendications pour l'Etat contractant suivant : ES**

**1.** Procédé pour la fabrication d'un macromère styrénique de polysiloxane-urée de structure A1 ou A2

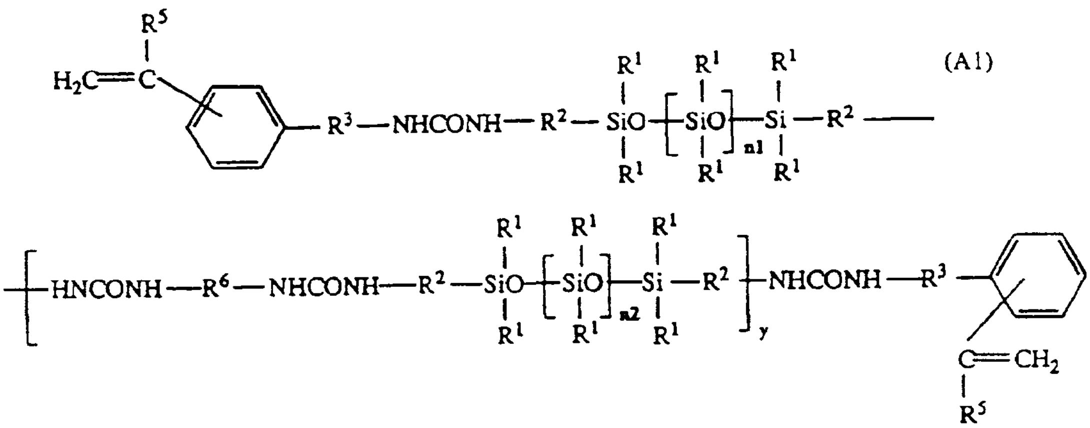

(A1)

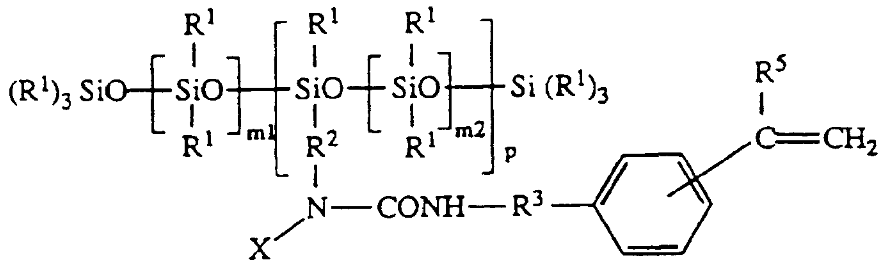

(A2)

dans lequel, indépendamment les uns des autres,

$R^1$ est un groupe méthyle, phényle ou 3,3,3-trifluoropropyle,

$R^2$ est un radical hydrocarboné linéaire ou ramifié saturé divalent ayant 1 à 6 atomes de carbone,

$R^3$ est une liaison directe ou possède la même définition que $R^2$,

$R^5$ est un atome d'hydrogène ou un groupe méthyle,

$R^6$ est le résidu divalent d'un diisocyanate aliphatique, cycloaliphatique ou aromatique de structure

$$OCN\text{-}R^6\text{-}NCO$$

n1 et n2 sont des nombres entiers de 2 à 250, à condition que la somme n1 + n2 ne dépasse pas 250,

m1 et m2 sont des nombres entiers de 2 à 200, à condition que la somme m1 + m2 ne dépasse pas 250,

y vaut de 0 à 2,

p vaut de 1 à 10, X est un atome d'hydrogène ou possède la structure E:

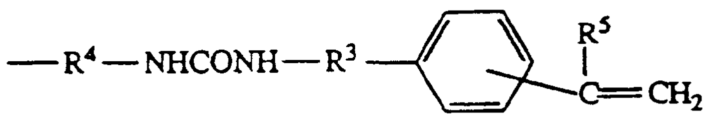

(E)

dans laquelle $R^4$ est un radical hydrocarboné ramifié ou linéaire saturé divalent ayant 1 à 6 atomes de carbone, comprenant de façon classique la réaction d'un composé de formule C1 ou C2

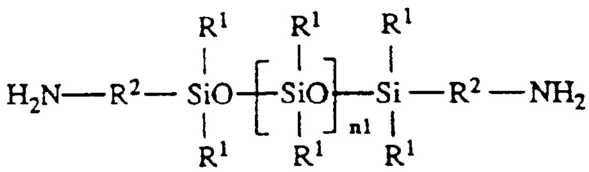

(C1)

ou

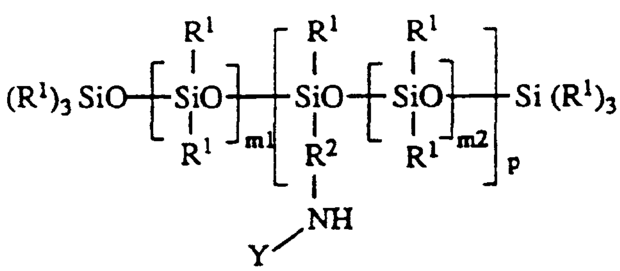

(C2)

dans laquelle Y est un atome d'hydrogène ou $-R^4NH_2$ et toutes les autres variables sont telles que définies ci-dessous, avec un isocyanate styrénique de structure

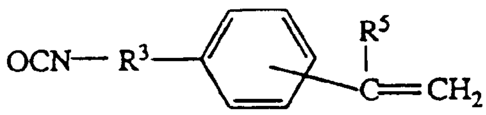

dans laquelle les variables sont telles que définies ci-dessus, de préférence en quantités équivalentes; dans laquelle un composé de formule C1, si souhaité, est mis à réagir avec un diisocyanate de structure OCN-$R^6$-NCO, dans laquelle $R^6$ est tel que défini ci-dessus, avant la réaction dudit composé de formule C1 avec ledit isocyanate styrénique.

2. Procédé selon la revendication 1 pour la fabrication d'un macromère de structure A1, dans lequel
$R^1$ est un groupe méthyle,
$R^2$ est un groupe triméthylène,
$R^3$ est groupe $-C(CH_3)_2-$
$R^5$ est un groupe méthyle,
y vaut zéro, et
n1 vaut de 5 à 100.

3. Procédé selon la revendication 1 pour la fabrication d'un macromère de structure A1, dans lequel
$R^1$ est un groupe méthyle,
$R^2$ est un groupe triméthylène,
$R^3$ est un groupe $-C(CH_3)_2-$
$R^5$ est un groupe méthyle,
y vaut 1
n1 + n2 vaut de 10 à 20, et $R^6$ est un résidu divalent aromatique ou aliphatique avec 6 à 12 atomes de carbone.

4. Procédé selon la revendication 1 pour la fabrication d'un macromère de structure A2, dans lequel
$R^1$ est un groupe méthyle,
$R^2$ est un groupe triméthylène,
$R^3$ est un groupe $-C(CH_3)_2-$
$R^5$ est un groupe méthyle,
X est de structure E,
$R^4$ est un groupe éthylène,
m1 et m2 valent de 5 à 100, la somme m1 + m2 ne dépassant pas 150,
et p vaut de 1 à 3.

5. Procédé selon la revendication 2 pour la fabrication d'un macromère de structure A1, dans lequel n1 vaut 10 à 50.

6. Procédé selon la revendication 1 pour la fabrication d'un macromère, dans lequel $R^3$ est une liaison directe et $R^5$ est un atome d'hydrogène, le groupe $-CR^5=CH_2$ étant dans la position para par rapport à $R^3$, ou dans lequel $R^3$ est $-C(CH_3)_2-$ et $R^5$ est un groupe méthyle, le groupe $-CR^5=CH_2$ étant dans la position méta par rapport à $R^3$.

7. Procédé selon la revendication 1 pour la fabrication d'un macromère, dans lequel $R^6$ est dérivé d'un diisocyanate de formule OCN-$R^6$-NCO, qui est choisi dans le groupe formé par le diisocyanate d'éthylène, le 1,2-diisocyanatopropane, le 1,3-diisocyanatopropane, le 1,6-diisocyanatohexane, le 1,2-diisocyanatocyclohexane, le 1,3-diisocyanatocyclohexane, le 1,4-diisocyanatobenzène; le bis-(4-isocyanatophényl)méthane, le diisocyanate de 1,2- et 1,4-toluène; le 3,3'-dichloro-4,4'-diisocyanatobiphényle; le 1,5-diisocyanatonaphtalène, le diisocyanate de toluène hydrogéné; le 1-isocyanatométhyl-5-isocyanato-1,3,3-triméthylcyclohexane (= diisocyanate d'isophorone); le 1,6-diisocyanato-2,2,4-(2,4,4)-triméthylhexane, le fumarate de 2,2'-diisocyanatodiéthyle; le 1,5-diisocyanato-1-carboxypentane; le 1,2-, 1,3-, 1,6-, 1,7-, 1,8-, 2,7- et 2,3-diisocyanatonaphtalène; le 2,4- et 2,7-diisocyanato-1-méthylnaphtalène; le 1,4-diisocyanato-méthyl-cyclohexane; le 1,3-diisocyanato-6(7)-méthylnaphtalène; le 4,4'-diisocyanatobiphényle; le 4,4'-diisocyanato-3,3'-diméthoxy-biphényle; le 3,3'- et 4,4'-diisocyanato-2,2'-diméthyl-biphényle; le bis-(4-isocyanatophényl)éthane; le bis(4-isocyanato-phényl)éther.

8. Procédé selon la revendication 7 pour la fabrication d'un macromère, dans lequel le diisocyanate est le

diisocyanate d'isophorone, le 2,2,4-(2,4,4)-triméthylhexane-1,6-diisocyanate ou le diisocyanate de 1,2- ou 1,4-toluène.

9. Procédé pour la fabrication d'un polymère, approprié comme polymère perméable à l'oxygène, biocompatible, utile pour préparer des lentilles de contact, qui comprend le produit réticulé de la copolymérisation
   (A) de 10 à 100% en poids dudit polymère d'un macromère polysiloxane de formule A1 ou A2 selon la revendication 1, ayant une masse moléculaire d'environ 400 à environ 10 000, ledit macromère contenant au moins deux groupes oléfiniques polymérisables terminaux, lesdits groupes étant liés au polysiloxane par l'intermédiaire d'une liaison urée, et
   (B) de 90% à 0% en poids dudit polymère d'un ou plusieurs monomères de vinyle mono-, di- ou trifonctionnels polymérisables par polymérisation de radicalaux.

10. Procédé selon la revendication 9 pour la fabrication d'un polymère, qui comprend le produit réticulé de la copolymérisation
   (A) de 15 à 90% en poids dudit polymère d'un macromère polysiloxane ayant une masse moléculaire d'environ 800 à environ 10 000, ledit macromère contenant deux groupes oléfiniques polymérisables terminaux, ledit macromère ayant la structure de formule A1 ou A2, et
   (B) de 85 à 10% en poids dudit polymère de monomères insolubles dans l'eau ou hydrosolubles ou leurs mélanges, lesdits monomères étant monooléfiniques, dioléfiniques ou un mélange de monomères monooléfiniques et dioléfiniques.

11. Procédé selon la revendication 9 pour la fabrication d'un polymère pour préparer des lentilles de contact dures, qui comprend le produit réticulé de la copolymérisation (A) de 15 à 80% d'un macromère polysiloxane de formule A1 ou A2, et (B) de 85 à 20% en poids d'un mélange de comonomères dont, par rapport au poids total des comonomères, ($B_1$) 100 à 65% en poids sont des monomères monooléfiniques insolubles dans l'eau ou leurs mélanges, ($B_2$) 0 à 35% en poids sont un monomère monooléfinique hydrosoluble ou un de ses mélanges, et ($B_3$) 0 à 35% en poids sont un monomère dioléfinique.

12. Procédé selon la revendication 11 pour la fabrication d'un polymère, dans lequel $B_1$ est le méthacrylate de méthyle, le méthacrylate de cyclohexyle, le méthacrylate de tris(triméthylsiloxanyl)silylpropyle, le méthacrylate de 2,2,2-trifluoroéthyle, le méthacrylate d'hexafluoroisopropyle, le méthacrylate de 1,1-dihydroheptafluorobutyle, le méthacrylate de triméthylcyclohexyle, le méthacrylate d'isobornyle, le méthacrylate de tert-butyle, le tertbutylstyrène ou leurs mélanges; $B_2$ est le méthacrylate de 2-hydroxyéthyle, le N,N-diméthylacrylamide, l'acide acrylique, l'acide méthacrylique, l'anhydride maléique ou la N-vinyl-2-pyrrolidone ou leurs mélanges; et $B_3$ est le diméthacrylate d'éthylèneglycol, le diacrylate ou le méthacrylate de néopentylglycol, et le bis-(3-méthacryloxypropyl)tétraméthyl disiloxane ou le bis(3-méthacryloxypropyl)tétra-(triméthylsiloxy)disiloxane.

13. Procédé selon la revendication 11 pour la fabrication d'un polymère, qui comprend le produit de la copolymérisation
   (A) de 20 à 75% en poids d'un polysiloxane de formule A1, où $R^1$ et $R^5$ sont un groupe méthyle, $R^2$ est un groupe triméthylène, $R^3$ est un groupe $-C(CH_3)_2-$, et n1 vaut de 10 à 50, et
   (B) de 80 à 25% en poids d'un mélange de comonomères dont, par rapport au poids total des comonomères,
      ($B_1$) 95 à 65% en poids sont un monomère monoléfinique insoluble dans l'eau ou un de ses mélanges, et
      ($B_2$) 5 à 35% en poids sont un monomère monooléfinique hydrosoluble ou un de ses mélanges.

14. Procédé selon la revendication 11 pour la fabrication d'un polymère, qui comprend le produit de la copolymérisation
   (A) de 20 à 75% en poids d'un polysiloxane de formule A1, où $R^1$ et $R^5$ sont un groupe méthyle, $R^2$ est un groupe triméthylène, $R^3$ est un groupe $-C(CH_3)_2-$, n1 vaut de 10 à 50, y vaut 1, et $R^6$ est le résidu divalent de diisocyanate d'isophorone; de 2,2,4-(2,4,4)-triméthylhexane-1,6-diisocyanate ou de diisocyanate de toluène; et
   (B) de 80 à 25% en poids de comonomères dont, par rapport au poids total des comonomères,
      ($B_1$) 95 à 65% en poids sont un monomère monoléfinique insoluble dans l'eau ou un de ses mélanges,
      ($B_2$) 5 à 35% en poids sont un monomère monooléfinique hydrosoluble ou un de ses mélanges, et
      ($B_3$) 0 à 20% en poids sont un monomère dioléfinique.

**15.** Procédé selon la revendication 11 pour la fabrication d'un polymère, qui comprend le produit de la copolymérisation

(A) de 20 à 75% en poids d'un polysiloxane de formule A1, où $R^1$ est un groupe méthyle, et

(B) de 80 à 25% en poids d'un mélange de comonomères dont, par rapport au poids total des comonomères,

($B_1$) 95 à 65% en poids sont un monomère choisi dans le groupe constitué du méthacrylate de méthyle, du méthacrylate de cyclohexyle, du méthacrylate de triméthylcyclohexyle, du méthacrylate d'isobornyle, du méthacrylate de 2,2,2-trifluoroéthyle, du méthacrylate d'hexafluoroisopropyle, du méthacrylate de 1,1-dihydroheptafluorobutyle, du méthacrylate de tris( triméthylsiloxysilyl )propyle, du méthacrylate de tert-butyle, du styrène et du tert-butylstyrène,

($B_2$) 5 à 35% en poids sont un monomère choisi dans le groupe constitué de l'acide acrylique, de l'acide méthacrylique, du N,N-diméthylacrylamide, et de l'anhydride maléique,

($B_3$) 0 à 20% en poids sont le diméthacrylate d'éthylèneglycol, le diacrylate de néopentylglycol, ou le bis-(3-méthacryloxypropyl)-tétraméthyldisiloxane.

**16.** Procédé selon la revendication 11 pour la fabrication d'un polymère, qui comprend le produit de la copolymérisation

(A) de 20 à 75% en poids d'un polysiloxane de formule A2, où $R^1$ et $R^5$ sont un groupe méthyle, $R^2$ est un groupe triméthylène, $R^3$ est un groupe $-C(CH_3)_2-$, X et de structure (E), $R^4$ est un groupe éthylène, n1 vaut de 10 à 50, p vaut de 1 à 3, et

(B) de 80 à 25% en poids d'un mélange de comonomères dont, par rapport au poids total des comonomères,

($B_1$) 95 à 65% en poids sont un monomère choisi dans le groupe constitué du méthacrylate de méthyle, du méthacrylate de cyclohexyle, du méthacrylate de triméthylcyclohexyle, du méthacrylate d'isobornyle, du méthacrylate de 2,2,2-trifluoroéthyle, du méthacrylate d'hexafluoroisopropyle, du méthacrylate de 1,1-dihydroheptafluorobutyle, du méthacrylate de tert-butyle, du styrène, du tert-butylstyrène, et du 3-méthacryloxypropyl-tris( triméthylsiloxy)silane,

($B_2$) 5 à 35% en poids sont un monomère choisi dans le groupe constitué de l'acide acrylique, de l'acide méthacrylique, du N,N-diméthylacrylamide, et de l'anhydride maléique, et

($B_3$) 0 à 20% en poids sont le diméthacrylate d'éthylèneglycol, ou le diacrylate de néopentylglycol, ou le bis-(3-méthacryloxypropyl)-tétraméthyldisiloxane.

**17.** Procédé selon la revendication 9 pour la fabrication d'un polymère pour des lentilles de contact souples avec une faible absorption d'eau, qui comprend le produit réticulé de la copolymérisation

(A) de 30 à 80% en poids d'un macromère polysiloxane de formule A1, et

(B) de 70 à 20% en poids d'un mélange de comonomères dont, par rapport au poids total des comonomères,

($B_1$) 100 à 89% en poids sont un monomère monooléfinique insoluble dans l'eau ou un de ses mélanges,

($B_2$) 0 à 10% en poids sont un monomère monooléfinique hydrosoluble ou un de ses mélanges, et

($B_3$) 0 à 1% en poids est un monomère dioléfinique.

**18.** Procédé selon la revendication 17, dans lequel $B_1$ est choisi dans le groupe formé de l'acrylate de méthyle, de l'acrylate ou du méthacrylate d'éthyle, de l'acrylate ou du méthacrylate de n-butyle, de l'acrylate ou du méthacrylate de n-hexyle, de l'acrylate ou du méthacrylate de 2-éthylhexyle, de l'acrylate ou du méthacrylate de n-octyle, de l'acrylate de n-décyle, de l'acrylate et du méthacrylate de 2-méthoxyéthyl-2-éthoxyéthyle, de l'acrylate et du méthacrylate de 2-méthoxyéthyle et de 2-éthoxyéthyle, des méthacrylates d'oligosiloxanylalkyle ayant 3 à 8 atomes de silicium, et des acrylates et des méthacrylates d'alkylène-$R_f$, où $R_f$ est un groupe perfluoroalkyle avec 1 à 10 atomes de carbone et l'alkylène est un groupe alkylène avec 1 à 5 atomes de carbone, et leurs mélanges.

**19.** Procédé selon la revendication 9 pour la fabrication d'un polymère, dans lequel le polymère comprend le produit réticulé de la copolymérisation (A) de 20 à 60% en poids d'un macromère polysiloxane de formule A1 ou A2, et (B) de 80 à 40% en poids d'un mélange de comonomères dont, par rapport au poids total des comonomères, ($B_1$) 0 à 30% en poids sont un monomère monooléfinique insoluble dans l'eau ou un de ses mélanges, ($B_2$) 100 à 69% en poids sont un monomère monooléfinique hydrosoluble ou un de ses mélanges, et ($B_3$) 0 à 1% en poids est un monomère dioléfinique.

**20.** Procéde selon la revendication 19, dans lequel le composant $B_2$ est le N,N-diméthylacrylamide, la N-vinyl-2-pyrrolidone, le méthacrylate de 2-hydroxyéthyle, l'acrylamide ou leurs mélanges.

**21.** Lentille de contact comprenant un polymère selon l'une quelconque des revendications 9 à 20.

**22.** Lentille de contact constituée essentiellement d'un polymère selon l'une quelconque des revendications 9 à 20.

**23.** Utilisation d'un polymère selon la revendication 9, pour la fabrication d'une lentille de contact.